# EUROPEAN PATENT SPECIFICATION

(11) **EP 1 309 806 B1**
(45) Date of publication and mention of the grant of the patent: **21.07.2004**
(21) Application number: 00944225.2
(22) Date of filing: 28.06.2000
(51) Int. Cl.: F16D 65/12

(54) **BRAKE DISK HAVING HIGH RESISTANCE TO WEAR AND THERMO-MECHANICAL STRESSES**
SCHEIBENBREMSE MIT HOHEM WIDERSTANDSVERMÖGEN GEGEN VERSCHLEISS UND THERMO-MECHANISCHE BEANSPRUCHUNG
DISQUE DE FREIN A RESISTANCE ELEVEE A L'USURE ET AUX CONTRAINTES THERMO-MECANIQUES

(43) Date of publication of application: 14.05.2003
(73) Proprietor: Freni Brembo S.p.A., 24035 Curno, (Bergamo) (IT)
(72) Inventor: PACCHIANA, Giovanni, Paolo, I-24036 Locate (IT); PERICO, Paolo, I-24125 Bergamo (IT)
(74) Representative: Crippa, Paolo Ernesto
(86) International application number: PCT/IT2000/000265
(87) International publication number: WO 2002/001088

(56) References cited:
- EP-A- 0 726 406
- DE-A- 19 726 674
- DE-C- 19 807 184
- FR-A- 2 546 250
- GB-A- 2 184 801
- US-A- 3 542 166
- US-A- 4 576 255

## Description

In general, the present invention relates to a brake disk having high resistance to wear and thermo-mechanical stresses.

In particular, the present invention relates to a brake disk as known from GB-A-2 184 801 and as defined in the preamble of claim 1.

It is known that a braking device of the type commonly in use in motor vehicles comprises a metal brake disk fixed to the wheel axle and, acting astride the disk, a caliper fixed to the stub axle or to the hub-carrier of the vehicle and having brake linings generally known as "pads".

In particular, the brake disk comprises a braking band having a swept braking surface, and a bell fixed to the wheel axle.

. The calipers, which are operated hydraulically by means of cylinder/piston units, push the pads against the swept surface of the braking band. The braking action is therefore brought about by the friction between the pads and the swept surface of the braking band of the brake disk.

The friction of the pads against the braking band of the disk causes the kinetic energy of the masses to be braked to be dissipated as heat, bringing about an increase in the brake-disk temperature, which increase is particularly high in the region of the swept surface.

For this reason, the braking band is required to be particularly resistant both to the wear caused by the abrasive action of the pads, and to temperature.

These wear-resistance characteristics are not, however, required of the bell for which, in contrast, it is advantageous to use a material which enables a complex geometrical shape with good mechanical characteristics to be produced.

For the above-mentioned reasons, it is known, particularly in high-performance braking devices, to form the brake disk in two parts, the braking band being made of wear-resistant and temperature-resistant material and the bell of material which has the above-mentioned mechanical characteristics.

The materials commonly used to produce the braking band are composite materials of the carbon/silicon carbide (C/SiC) type, or metal-matrix materials (MMCs) which are distinguished by good wear resistance, a high degree of hardness and, at the same time, fragility, a low coefficient of thermal expansion, and low specific weight.

Materials commonly used for the bell, on the other hand, are metals such as steel, anodized aluminium alloys, etc.

In order to take account of the different thermal expansion of the materials and of the fragility of the braking band, the coupling between the bell and the braking band is often formed by a restrained joint with tangential and axial restraints and without any radial restraint so as to allow for the different radial expansions of the two parts and to prevent cracks or fissures arising in the composite material of the braking band.

In particular, the tangential restraint of the above-mentioned coupling, which is essential for the transmission of the braking torque, is achieved by means of a toothed coupling between radial teeth provided along the outer surface of the bell and corresponding radial teeth provided along the inner surface of the braking band.

However, a coupling of this type between the bell and the braking band has the serious disadvantage that, because of the machining tolerances of these parts, it is not possible to ensure that all of the teeth of the bell and the corresponding teeth of the braking band which are in contact are stressed tangentially in the same manner as a result of the braking action.

In other words, with a coupling of this type, it is not possible to ensure that the loads transmitted by the braking action are distributed uniformly on the teeth of the bell and on the corresponding teeth of the braking band.

Some pairs of radial teeth of the joint therefore often undergo a considerably greater tangential mechanical stress than other pairs, as a result of which the breaking load may be exceeded or cracks or fissures may be triggered in the fragile material of the braking band, such cracks tending to be propagated rapidly throughout the surface of the material.

The technical problem upon which the present invention is based is that of providing a brake disk having structural and functional characteristics of the coupling between the bell and the braking band such as to overcome the disadvantages mentioned above with reference to the brake disks of the prior art.

This problem is solved by a brake disk comprising a bell, having an axis of rotation, and a braking band, produced as separate parts and in engagement by means of a shaped coupling with tangential and axial restraints, characterized in that the brake disk comprises at least one insert which is deformable in a plastic or elastic manner in the shaped coupling in order to ensure that the loads transmitted by a braking action are distributed substantially uniformly on the braking band and on the bell.

The present invention is based upon the surprising discovery that, if at least one insert made of a material which is deformable in a plastic or elastic manner is interposed in the joint between the bell and the braking band, the loads transmitted by the braking action are distributed substantially uniformly on the bell and on the braking band since the excessive tangential stresses which may arise in some joints due to the manufacturing tolerances between the bell and the braking band are absorbed by the material of the inserts of these joints by plastic or elastic deformation thereof.

By virtue of the substantially uniform distribution of the loads on the bell and on the braking band which is achieved in the brake disk according to the present invention, the likelihood of cracks or fissures being triggered in the relatively fragile material of the braking band is advantageously greatly reduced since, in contrast with the prior art mentioned, the braking band is no longer substantially subject to excessive local stresses.

In the brake disk according to the present invention, the material of the inserts interposed between the bell and the braking band may be selected, for example, from drawing steel and copper alloys, each of the materials mentioned having plastic or elastic deformation characteristics adequate for absorbing the excessive tangential stresses due to the manufacturing tolerances between the bell and the braking band.

The material of the inserts is preferably drawing steel.

The material used for the production of the bell, on the other hand, is selected from metals having good mechanical characteristics such as, for example, steel, hard anodized aluminium alloys, sintered steel, and cast iron.

In contrast, the materials used for the production of the braking band are composite materials of the carbon/silicon carbide (C/SiC) type or metal-matrix materials (MMCs) such as, for example, aluminium alloys reinforced with ceramic particles such as silicon carbide, alumina, titanium boride, etc.

Further characteristics and advantages of the brake disk according to the present invention will become clearer from the following description of some preferred embodiments of the brake disk, the description being given by way of non-limiting example with reference to the appended drawings, in which:
Figure 1 is an exploded perspective view of an embodiment of the brake disk according to the present invention,
Figure 2 is a front view of the brake disk of Figure 1,
Figures 3 and 3a are respective views of a section of the brake disk of the present invention extended in a plane, taken along a cylindrical drawing surface III-III of Figure 2,
Figure 4 is a perspective view of a detail of the brake disk of Figure 1,
Figure 5 is an exploded perspective view of another embodiment of the brake disk according to the present invention,
Figure 6 is a front view of the brake disk of Figure 5,
Figures 7 and 7a are respective views of a section of the brake disk of the present invention extended in a plane, taken along a cylindrical drawing surface VII-VII of Figure 6,
Figure 8 is an exploded perspective view of a further embodiment of the brake disk according to the present invention,
Figure 9 is a front view of the brake disk of Figure 8,
Figures 10 and 10a are respective views of a section of the brake disk of the present invention extended in a plane, taken along a cylindrical drawing surface X-X of Figure 9,
Figure 11 is an exploded perspective view of a further embodiment of the brake disk according to the present invention,
Figure 12 is an exploded perspective view of a further embodiment of the brake disk according to the present invention,
Figure 13 is a front view of the brake disk of Figure 12,
Figures 14 and 14a are respective views of a section of the brake disk of the present invention extended in a plane, taken along a cylindrical drawing surface XIV-XIV of Figure 13,
Figure 15 is an exploded perspective view of a further embodiment of the brake disk according to the present invention,
Figure 16 is a front view of the brake disk of Figure 15,
Figures 17 and 17a are respective views of a section of the brake disk of the present invention extended in a plane, taken along a cylindrical drawing surface XVII-XVII of Figure 16,
Figure 18 is a schematic section through a portion of a detail of the brake disk of Figure 15.

In the drawings, for each embodiment of the brake disk according to the present invention described below, the same reference numerals are attributed to common and functionally equivalent structural elements.

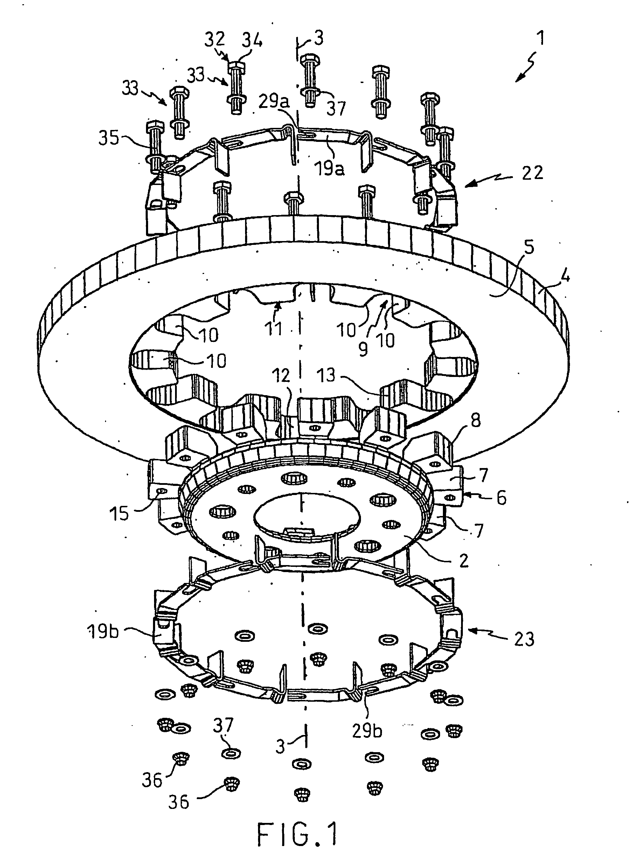

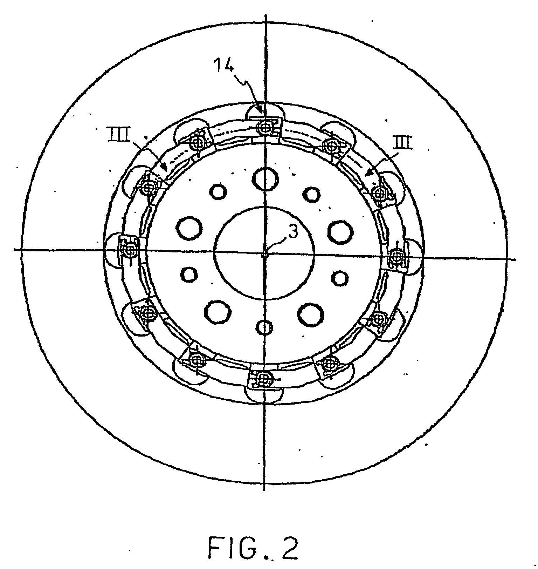

With reference now to Figures 1-4, a brake disk according to the present invention, generally indicated 1, comprises a bell 2, having an axis of rotation 3, and a braking band 4, provided with a swept braking surface 5.

Preferably, the bell 2 is made of hard anodized aluminium alloy or of sintered steel, whereas the braking band 4 is made of a composite carbon/silicon carbide material.

The bell 2 has an outer set of teeth constituted by a plurality of radial teeth 6 which are preferably spaced uniformly and have sides 7 joined by respective straight or curved head surfaces 8.

Each radial tooth 6 of the bell 2 has an axial through-hole 15 through which fixing means described in the following part of the description can extend in order to achieve the axial restraint between the bell 2 and the braking band 4.

The braking band 4, on the other hand, has an inner set of teeth constituted by a plurality of radial teeth 11, and corresponding recesses 9 between the teeth 11.

Preferably, the radial teeth 11 of the braking band 4 are spaced uniformly and the number of radial teeth 11 is equal to the number of radial teeth 6 of the bell 2.

In particular, each recess 9 is delimited by facing sides 10 of two neighbouring teeth 11 of the braking band 4, the sides 10 converging towards the axis of rotation of the disc 3, and by a base surface 12 having an elliptical shape such as not to interfere with the swept braking surface 5 in order to limit the transmission of heat from the braking band 4 to the bell 2.

The opposite sides 10 of each tooth 11 of the braking band 4 are joined by a straight or curved head surface 13.

The sides 7 of the teeth 6 also converge towards the axis of rotation 3 of the bell 2 with the same inclination as the sides 10 which delimit the recesses 9.

According to the invention, tangential restraint is achieved in the brake disk 1 by means of a toothed coupling 14 with clearance between the teeth 6 of the bell 2 and the teeth 11 of the braking band 4, after the interposition of inserts 19 between them.

Each insert 19 is constituted by a substantially "L"-shaped plate-like element having unequal limbs 20 and 21, the limbs being joined to one another by a curved portion 26 disposed outside the plane containing the second limb 21 and having its concave side facing towards the first limb 20.

The second limb 21 also has an open hole 29 in its free end.

Moreover, a greater part of the length of the second limb 21, containing the above-mentioned open hole 29, extends at an inclination to the perpendicular to the plane containing the first limb 20 so that, during the assembly of the brake disk 1, the hole 29 is aligned with a respective hole 15 of a successive tooth 6 of the bell 2, the limb approximating to an arcuate shape equivalent to a circular sector covered by two adjacent teeth.

In this embodiment, a first circumferential series 22 of first plate-like elements 19a is disposed on one side of the toothed coupling 14 between the bell 2 and the braking band 4 and a corresponding, second circumferential series 23 of second plate-like elements 19b is disposed on the opposite side of the toothed coupling 14 so that, in the region of each tooth 11 of the braking band 4, there are two associated plate-like elements, that is, a first plate-like element 19a and a second plate-like element 19b, disposed opposite one another, that is, situated on opposite sides of the tooth 11 of the braking band 4.

In particular, for each tooth 11, the first plate-like element 19a has a first limb 20a having an inner surface 24a bearing on one of the two opposite sides 10 of the tooth 11 and an outer surface 25a coupled with clearance with a side 7 of a first tooth 6a of the bell 2 adjacent the tooth 11 of the braking band 4.

The second plate-like element 19b disposed opposite the first plate-like element 19a, on the other hand, has a respective limb 20b having an inner surface 24b bearing on the other of the two opposite sides 10 of the tooth 11 and an outer surface 25b coupled with clearance with a side 7 of a second tooth 6b of the bell 2 neighbouring the first tooth 6a and adjacent the above-mentioned tooth 11 of the braking band 4.

The first limbs 20a and 20b preferably extend so as to bear on the two opposite sides 10 of the tooth 11 substantially throughout the greater part of the axial length thereof.

Moreover, again for each tooth 11 of the braking band 4, the first plate-like element 19a has a second limb 21a which is joined to the first limb 20a by a curved portion 26a, and the second plate-like element 19b has a second limb 21b which is joined to the first limb 20b by a curved portion 26b.

The second limb 21a of the first plate-like element 19a extends circumferentially on one side of the toothed coupling 14 between the bell 2 and the braking band 4 and comprises a first portion 27a which extends from the curved portion 26a, in contact with the tooth 11, and a second portion 28a in contact with the second tooth 6b.

Similarly, the second limb 21b of the second plate-like element 19b extends circumferentially on the opposite side of the toothed coupling 14 and in the opposite direction to the second limb 21a of the first plate-like element 19a.

In particular, the second limb 21b comprises a first portion 27b which extends from the curved portion 26b, in contact with the tooth 11 of the braking band 4, and a second portion 28b in contact with the first tooth 6a neighbouring the second tooth 6b and adjacent the tooth 11 of the braking band 4.

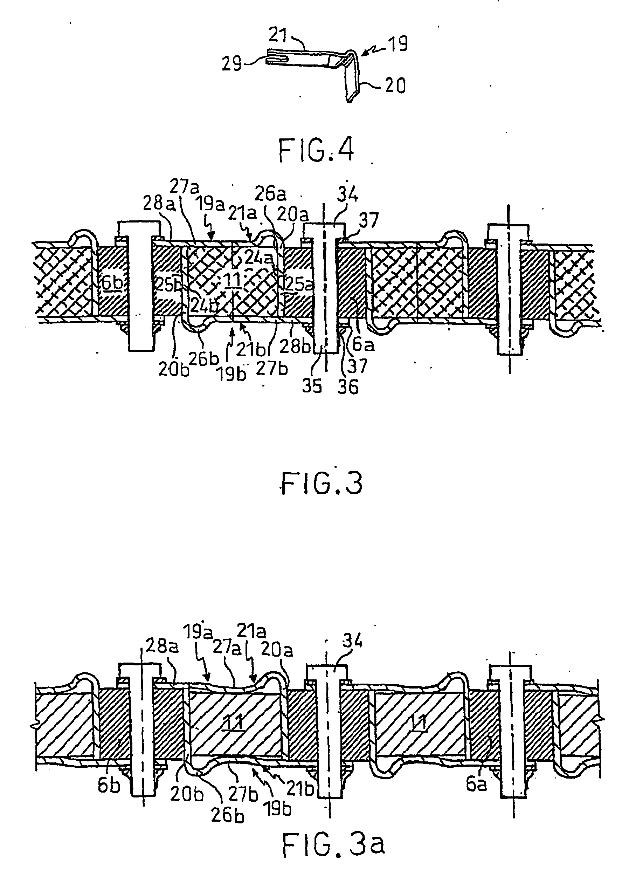

As is clear from Figures 3 and 3a, the two curved joining portions 26a and 26b extend or project from respective opposite sides of the toothed coupling 14.

This advantageously prevents the opposed plate-like elements 19a and 19b associated with a tooth 11 of the braking band 4, which closely follow the corners of the tooth 11, from stressing them mechanically.

The curved joining portions 26a and 26b also favour the correct insertion of the limbs 20a and 20b in the axial direction so that these limbs can advantageously interact with the respective sides 10 of a tooth 11 throughout the greater part of the axial length or depth thereof.

Each of the plate-like elements 19a of the first series 22 has an open hole 29a formed in the second portion 28a of the second limb 21a and, similarly, each of the plate-like elements 19b of the second series 23 has a hole 29b formed in the second end portion 28b of the second limb 21b.

In particular, for each tooth 6 of the bell 2 there is an associated pair of opposed holes 29a and 29b belonging, respectively, to a first plate-like element 19a and to a second plate-like element 19b which are associated with two adjacent teeth 11 of the braking band 4.

Each pair of opposed holes 29a and 29b is aligned with the through-hole 15 formed in the respective tooth 6 of the bell 2 to permit the insertion of fixing means which restrain the bell 2 and the braking band 4 axially, in association with the plate-like elements 19a and 19b.

In this embodiment, the fixing means take the form, for each tooth 6, of a bolt assembly 32 composed of a bolt 33 having a head 34 and a shank 35 which extends through the hole 15 in the tooth 6 and a pair of opposed holes 29a and 29b associated with the tooth 6, a nut 36, and two washers 37 associated with the shank 35 and arranged on opposite sides of the tooth 6 so as to be in contact with the head 34 and with the nut 36, respectively.

Each bolt assembly 32 associated with a tooth 6 of the bell 2 thus restrains on the tooth 6 a pair of end portions 28a, 28b of corresponding plate-like elements 19a and 19b associated, respectively, with neighbouring teeth 11 of the braking band 4, and consequently restraining the bell 2 and the braking band 4 axially.

According to a preferred embodiment of the invention which is shown in deliberately accentuated manner in Figure 3a in order to make its characteristics clear, the axial length or depth of the teeth 6 of the bell 2 is slightly greater than the axial length or depth of the teeth 11 of the braking band 4, by an amount of the order, for example, of a few tenths of a millimetre, and the first portions 27a and 27b of the first plate-like element 19a and of the second plate-like element 19b associated with a tooth 11 of the braking band 4 are curved in a manner such as to have concave sides facing away from the respective first limbs 20a and 20b of the plate-like elements 19a and 19b.

In this embodiment, the first portions 27a and 27b axially preload the respective tooth 11 of the braking band 4, that is, they constantly act or, in other words, exert axial forces thereon.

In particular, this preloading takes place in a predefined region of contact between respective sections of the first portions 27a and 27b and corresponding surface portions of the tooth 11.

Free relative movements, due to the clearances, between the bell 2 and the braking band 4 are thus advantageously prevented by resilient forces directed axially or tangentially.

Naturally, the first portions 27a and 27b of the first plate-like element 19a and of the second plate-like element 19b associated with a tooth 11 of the braking band 4 may be curved so that each has more than one section in contact with a corresponding surface of the tooth 11 in order to exert the axial preloading.

Alternatively, the above-mentioned axial preloading function may also be performed by making the axial length or depth of the teeth 11 of the braking band 4 slightly greater than the axial length or depth of the teeth 6 of the bell, by an amount of the order, for example, of a few tenths of a millimetre, without curvature of the above-mentioned first portions 27a and 27b of the first plate-like element 19a and of the second plate-like element 19b.

The axial preloading on each tooth 11 of the braking band 4 associated with a first plate-like element 19a and with a second plate-like element 19b would in fact thus be exerted entirely by the first portions 27a and 27b of the plate-elements 19a and 19b, once the axial restraint between the bell 2 and the braking band 4 had been achieved.

In order to assemble the brake disk 1, each first plate-like element 19a of the first series 22 is inserted in a corresponding recess 9 from one side of the braking band 4 so as to arrange the inner surface 24a of the first limb 20a bearing on one of the opposite sides 10 which delimit the recess 9.

Then, in order to achieve the tangential restraint in the brake disk 1, the radial teeth 6 of the bell 2 are inserted in the respective recesses 9, forming the toothed coupling 14 between the bell 2 and the braking band 4, and each second plate-like element 19b of the second series 23 is inserted in the corresponding recess 9 from the opposite side of the braking band 4 so as to arrange the inner surface 24b of the first limb 20b bearing on the other side 10 delimiting the said recess 9.

Finally, the first plate-like elements 19a and the second plate-like elements 19b are anchored to the respective teeth 6 of the bell by means of the bolt assemblies 32, thus achieving the axial restraint between the bell 2 and the braking band 4.

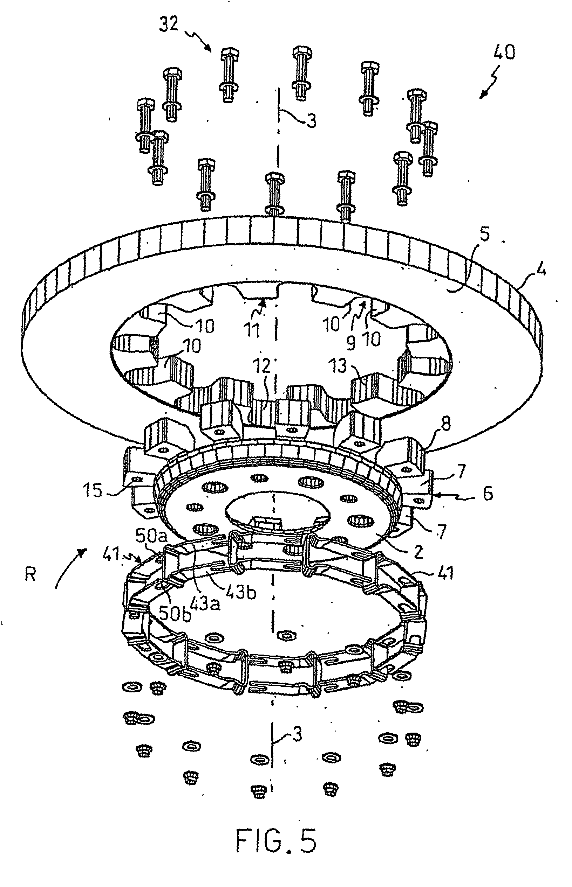

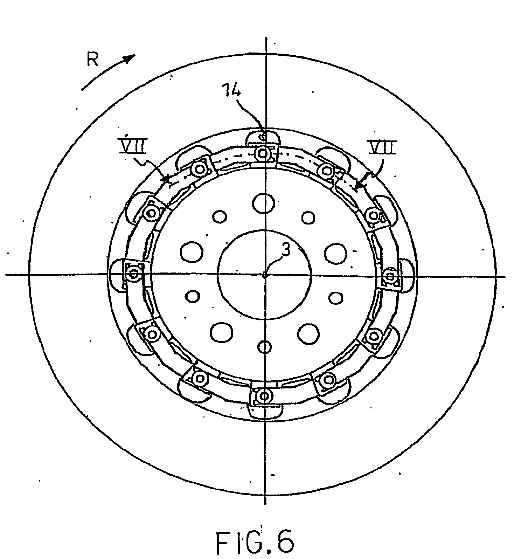

Another embodiment of the brake disk according to the present invention, generally indicated 40, will now be described with reference to Figures 5-7.

In the brake disk 40, the inserts interposed between the bell 2 and the braking band 4 are constituted by a circumferential series of plate-like elements 41 of substantially U-shaped profile, each of the plate-like elements 41 comprising a base 42, as well as a first limb 43a and a second limb 43b which are substantially identical to one another and are joined to corresponding ends of the base 42 by curved portions 44a and 44b, respectively.

The curved portions 44a and 44b are disposed outside the respective planes containing the first limb 43a and the second limb 43b and both have their concave sides facing towards the base 42.

In this embodiment, a plate-like element 41 is associated with each tooth 11 of the braking band 4 in a manner such that the base 42 has an inner surface 45 bearing on that side 10 of the tooth 11 which has its surface facing in the opposite direction to the direction of rotation R of the braking band 4 in use, the base 42 having an outer surface 46 coupled with clearance with a side 7 of a first tooth 6a of the bell 2 adjacent the tooth 11 of the braking band 4.

The base 42 preferably extends so as to bear on the side 10 of the tooth 11 substantially throughout the axial length thereof.

The other of the two opposites sides 10 of the tooth 11, that is, the side 10 having its surface facing in the direction of rotation R of the braking band 4, is coupled with clearance, without the interposition of inserts, with a second tooth 6b neighbouring the first tooth 6a and adjacent the tooth 11 of the braking band 4,.

Moreover, again for each tooth 11, the first limb 43a and the second limb 43b of the plate-like element 41 extend circumferentially on opposite sides of the toothed coupling 14 between the bell 2 and the braking band 4.

In particular the first limb 43a has a first portion 48a which extends from the curved portion 44a, so as to be in contact with the tooth 11, and a second portion 49a in contact with the second tooth 6b of the bell 2.

Similarly, the second limb 43b has a first portion 48b which extends from the curved portion 44b, so as to be in contact with the tooth 11, and a second portion 49b in contact with the second tooth 6b of the bell 2.

For each plate-like element 41, both the second portion 49a of the first limb 43a and the second portion 49b of the second limb 43b, which are in contact with a tooth 6 of the bell 2, have respective open holes 50a and 50b aligned with a through-hole 15 formed in the tooth 6.

In order to achieve the axial restraint in the braking disk 40, a bolt assembly 32 is associated with each tooth 6 of the bell, enabling the opposed portions 49a and 49b of a plate-like element 41 to be restrained on the tooth 6, and consequently achieving axial restraint of the bell 2 and the braking band 4.

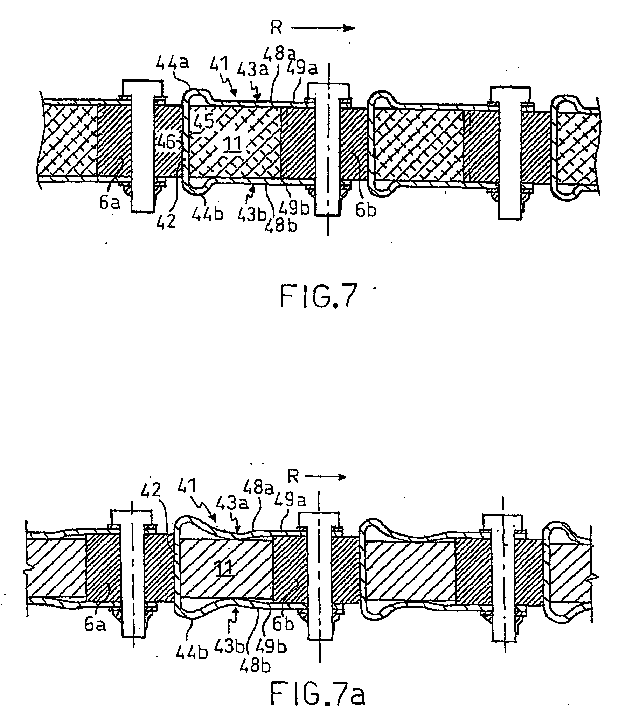

According to a preferred embodiment of the invention shown in Figure 7a, the axial length or depth of the teeth 6 of the bell 2 is slightly greater than the axial length or depth of the teeth 11 of the braking band 4, by an amount of the order, for example, of a few tenths of a millimetre, and the first portions 48a and 48b of a plate-like element 41 associated with a tooth 11 of the braking band 4 are curved so as to be concave on the side of the plate-like element 41 facing away from the base 42.

Each tooth 11 of the braking band 4 is thus preloaded axially by the first portions 48a and 48b of a respective plate-like element 41 associated therewith.

In order to assemble the brake disk 40, each plate-like element 41 is produced with one of the two limbs 43a or 43b open and is inserted in a corresponding recess 9 in a manner such that the inner surface of the base 42 is arranged bearing on that one of the two sides 10 delimiting the recess which has its surface facing in the opposite direction to the direction of rotation R of the braking band 4 in use.

The radial teeth 6 of the bell 2 are then inserted in the respective recesses 9, forming the toothed coupling 14 between the bell 2 and the braking band 4, and the open limb 43a or 43b of each plate-like element 41 is bent so as to be disposed on one side of the toothed coupling 14.

Finally, the plate-like elements 41 are anchored to the respective teeth 6 of the bell 2 by means of the bolt assemblies 32.

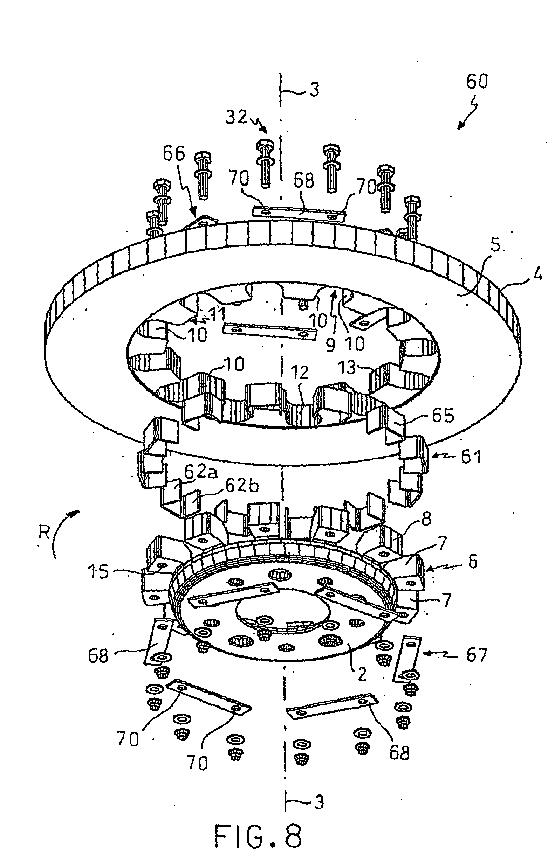

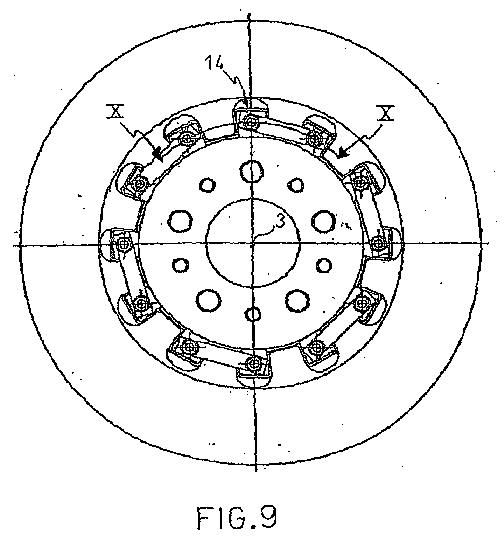

Another brake disk according to the present invention, generally indicated 60, will now be described with reference to Figures 8-10.

In the brake disk 60, the inserts interposed between the bell 2 and the braking band 4 are constituted by a circumferential series of substantially C-shaped plate-like elements 61 each having a profile which is substantially complementary to that of a tooth 6 of the bell 2 and comprises a base 65 and two substantially identical limbs 62a and 62b, each plate-like element 61 being able to be fitted in a corresponding recess 9 with each of the limbs 62a and 62b interfering with a respective one of the opposed sides 10 delimiting the recess 9.

In particular, each recess 9 of the braking band 4 is associated with a plate-like element 61 in which the limbs 62a and 62b have respective inner surfaces 63a and 63b each coupled with clearance with one of the two opposite sides 7 of a tooth 6 of the bell 2 which engages the recess 9, and respective outer surfaces 64a and 64b each in contact with one of the two facing sides 10 of two neighbouring teeth 11a and 11b defining the recess 9.

The base 65 of each plate-like element 61 associated with a recess 9, however, is coupled with clearance with the head surface 8 of a tooth 6 of the bell 2 which engages the recess 9.

Preferably, each of the limbs 62a and 62b extends substantially throughout the axial length of a respective side 10 delimiting the recess 9 and the base 65 extends substantially throughout the axial length of the head surface 8 of a respective tooth 6 of the bell 2.

The brake disk 60 also has a first plurality 66 of plates 68 arranged in a circumferential series on one side of the toothed coupling 14 of the brake disk 60 and a second plurality 67 of plates 68 arranged in a circumferential series on the opposite side of the toothed coupling 14.

Each plate 68 has two opposed holes 70 in alignment with respective holes 15 of two neighbouring teeth 6 and, moreover, the plates 68 of the first plurality 66 alternate with the plates 68 of the opposed second plurality 67.

Each tooth 11 of the braking band 4 is thus preloaded axially by a respective plate 68 of the first plurality 66 or of the second plurality 67.

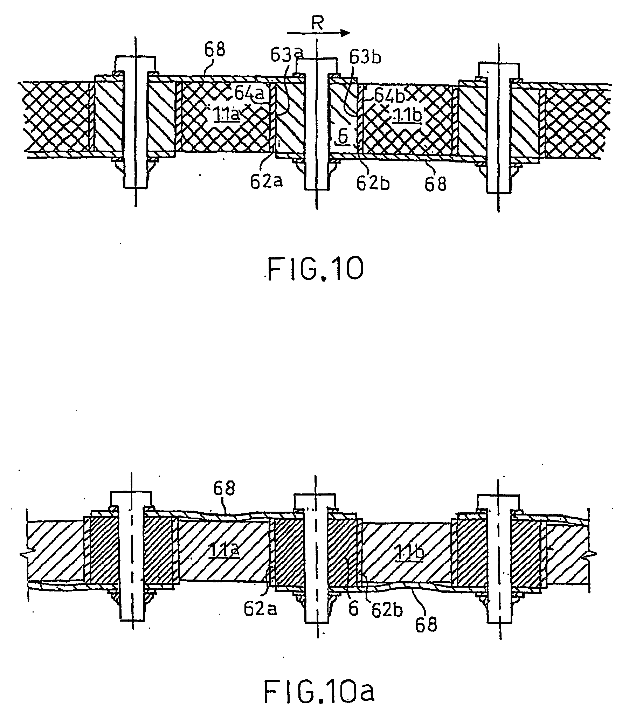

According to a preferred embodiment of the invention shown in Figure 10a, the axial length or depth of the teeth 6 of the bell 2 is slightly greater than the axial length or depth of the teeth 11 of the braking band 4 by an amount of the order, for example, of a few tenths of a millimetre, and each plate 68 of the first plurality 66 and of the second plurality 67, which plate 68 extends over two neighbouring teeth 6 of the bell 2, is curved so that a portion thereof is in contact with a corresponding surface portion of a tooth 11 of the braking band 4 interposed between the neighbouring teeth 6 of the bell 2.

In order to achieve the axial restraint in the brake disk 60, each plate 68 of the first plurality 66 and of the second plurality 67 is restrained on two neighbouring teeth 6 of the bell 2 by means of bolt assemblies 32.

In order to assemble the brake disk 60, each plate-like element 61 is inserted in a corresponding recess 9 so that the outer surfaces 64a and 64b of the limbs 62a and 62b interfere with respective facing sides 10 of two neighbouring teeth 11 delimiting the recess 9.

The radial teeth 6 of the bell 2 are then inserted in the respective recesses 9, forming the toothed coupling 14 between the bell 2 and the braking band 4.

Finally, the plates 68 of the first plurality 66 and of the second plurality 67 are arranged in circumferential series on. respective opposite sides of the toothed coupling 14 and the plates 68 are anchored to the respective teeth 6 of the bell 2 by means of the bolt assemblies 32.

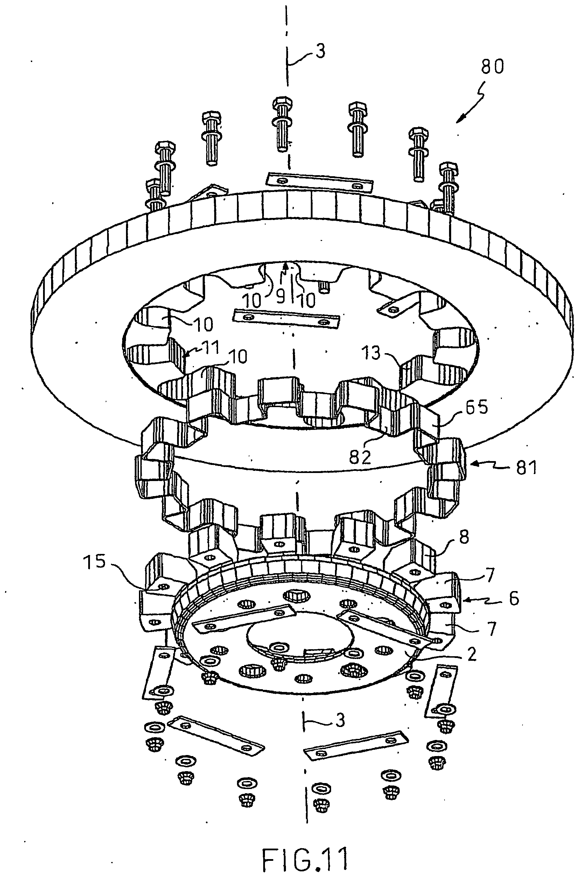

Another embodiment of the brake disk according to the present invention, generally indicated 80, will. now be described with reference to Figure 11.

The brake disk 80 of this embodiment differs from the brake disk 60 described above and illustrated in Figures 8-10 in that the plate-like elements 61 are joined together to form a ring 81 by respective portions 82, each of the portions 82 joining the free ends of two facing limbs 62 belonging to two neighbouring plate-like elements 61.

Each portion 82 also has a surface coupled with clearance with a corresponding head surface 13 of a tooth 11 of the braking band 4 and preferably extends throughout the axial length of the head surface 13.

This embodiment has the advantage that the insert interposed between the teeth 6 of the bell 2 and the teeth 11 of the braking band 4 is formed as a single part, thus facilitating the assembly of the brake disk 80.

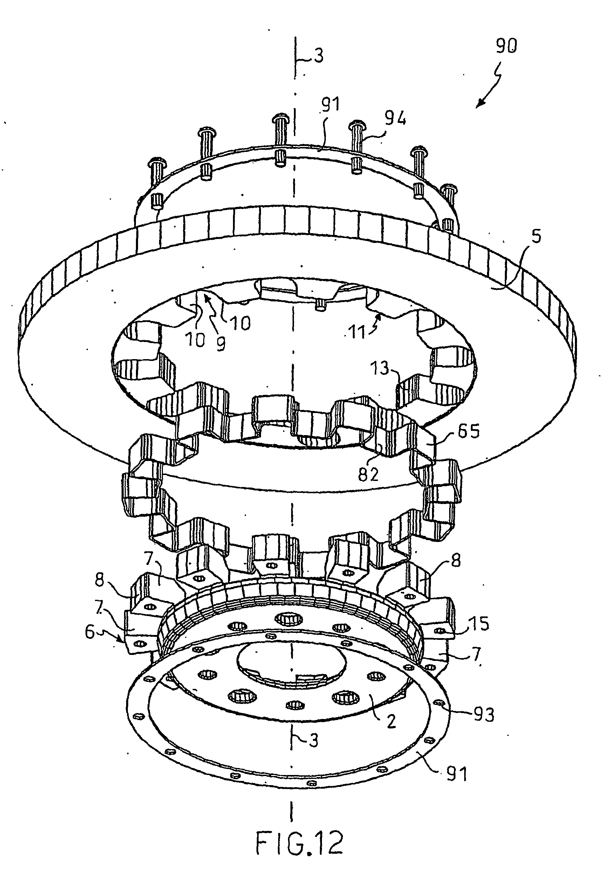

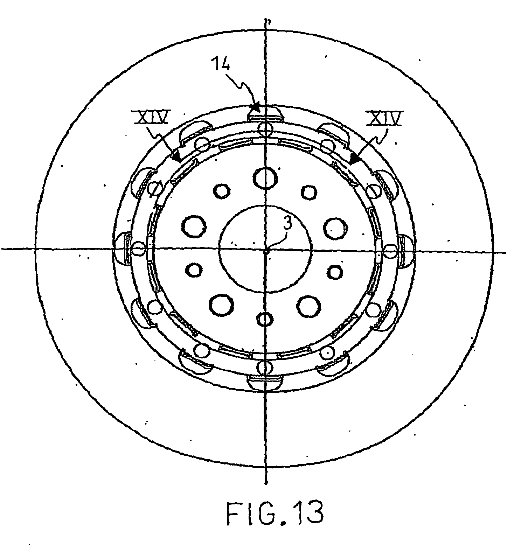

Another embodiment of the brake disk according to the present invention, generally indicated 90, will now be described with reference to Figures 12-14.

In the brake disk 90, the inserts interposed between the bell 2 and the braking band 4 are constituted by plate-like elements 61 joined to form a ring 81 as described above for the brake disk 80 shown in Figure 11.

However, for the axial restraint between the bell 2 and the braking band 4, the brake disk 90 has two annular plates 91 disposed on opposite sides of the toothed coupling 14 between the bell 2 and the braking band 4 and both having a plurality of circumferential holes 93 in alignment with corresponding holes 15 provided in the teeth 6 of the bell 2.

The two annular plates 91 are restrained on the teeth 6 of the bell 2 by means of suitable rivets 94, each rivet 94 being associated with a tooth 6 of the bell 2.

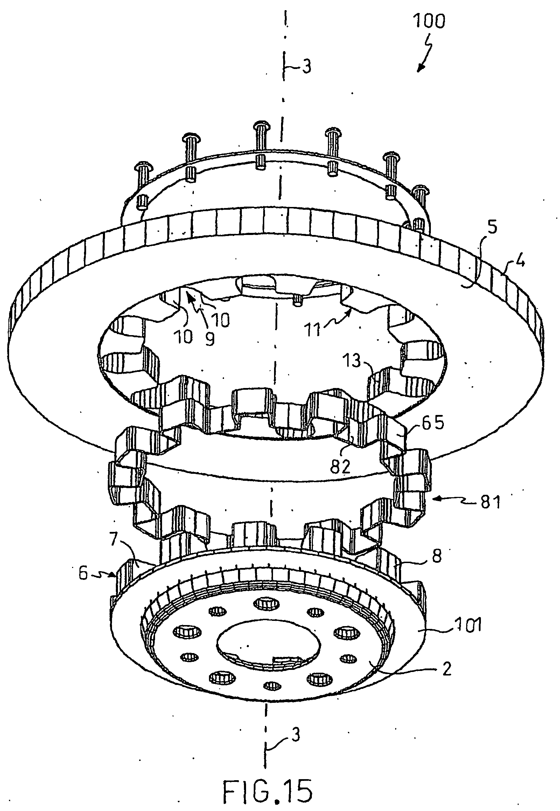

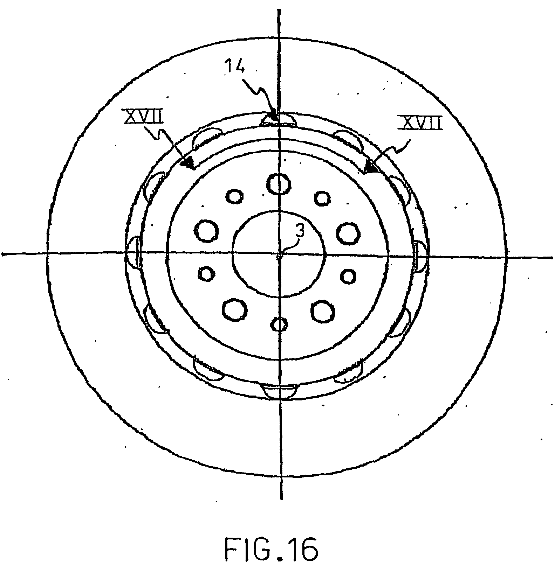

Another, particularly preferred embodiment of the brake disk according to the invention, generally indicated 100, will now be described with reference to Figures 15-18.

The brake disk 100 of this embodiment differs from the brake disk 90 described above and illustrated in Figures 12-14 in that the bell 2 has an annular band 101 formed integrally with or welded to a peripheral portion of the bell comprising the radial teeth 6.

Each tooth 6 of the bell 2 therefore has an axial blind hole, and an annular plate 91, restrained on the teeth 6 of the bell 2 by means of rivets 102, for example, of the "fast" type, is provided for achieving the axial restraint between the bell 2 and the braking band 4.

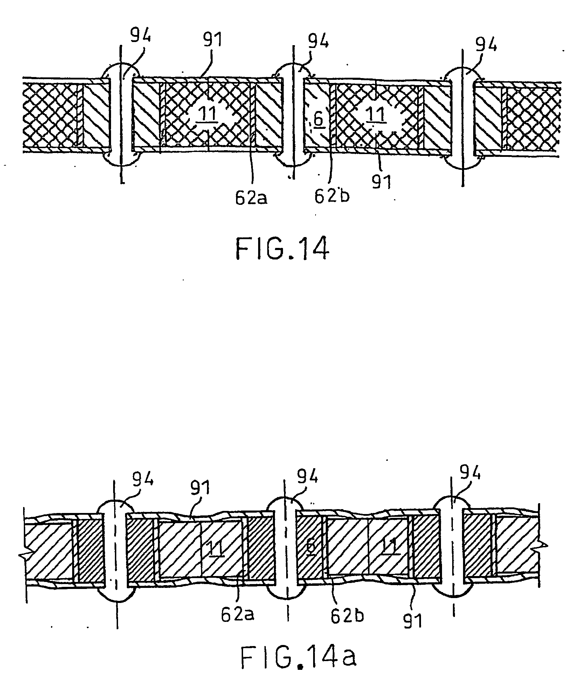

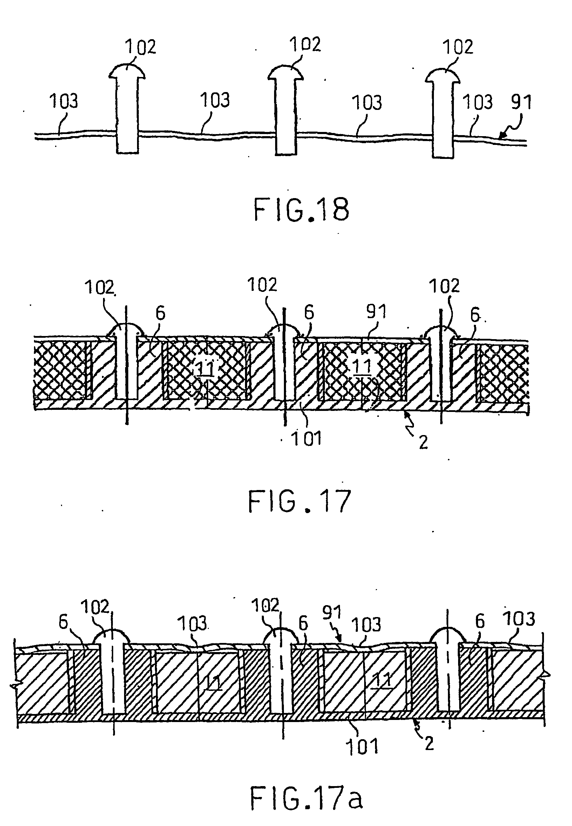

According to a preferred embodiment of the invention shown in Figure 14a with reference to the brake disk 90 and in Figure 17a with reference to the brake disk 100, the axial length or depth of the teeth 6 of the bell 2 is slightly greater than the axial length or depth of the teeth 11 of the braking band 4 by an amount of the order, for example, of a few tenths of a millimetre, and each annular plate 91 has a curved portion 103, as shown in Figure 18, for preloading each tooth 11 of the braking band 4 axially by interaction or contact of the portions 103 with corresponding surface portions of the teeth 11 of the braking band 4.

In the brake disk according to the present invention, there is generally a coupling with clearance between the radial teeth of the bell and the inserts interposed between the bell and the braking band.

In this coupling, each insert interposed in a respective recess 9 bears on at least one of the two facing sides 10 of two corresponding neighbouring teeth 11 of the braking band 4, and is coupled with clearance with at least one of the two sides 7 of a corresponding tooth 6 of the bell 2 forming a toothed coupling with the two neighbouring teeth 11 of the braking band 4.

In particular, each side 10 of each tooth 11 lies in a respective radial plane extending through the axis of rotation 3 of the brake disk 1 and each side 7 of each tooth 6 facing a corresponding side 10 lies in a respective plane parallel to the corresponding radial plane, and the distance between each pair of facing sides of a tooth of the bell and of a tooth of the braking band is preferably equal to the thickness of the insert interposed between the teeth, preferably plus half of the clearance.

Moreover, as will be described below, each insert can also be interposed in a respective recess 9 in a manner such as to bear on or to interfere with at least one of the two facing sides 10 of two corresponding neighbouring teeth 11 of the braking band 4 and on or with at least one of the two sides 7 of a corresponding tooth 6 of the bell 2 forming a toothed coupling with the two neighbouring teeth 11 of the braking band 4.

The main advantage of the brake disk according to the present invention is that the inserts enable the loads transmitted by the braking action to be distributed substantially uniformly on the bell and on the braking band, thus greatly reducing the likelihood of the triggering of cracks or fissures in the relatively fragile material of the braking band due to excessive local stresses.

A further advantage of the brake disk according to the present invention is that it is easy and inexpensive to produce.

In the description given above, reference is made to an insert made of material which is deformable in a plastic or elastic manner.

In particular, "material deformable in a plastic or elastic manner" is intended to define a material which, when subject to a load such as, for example, the braking action undergone by the braking band, deforms in an "elastoplastic" manner, or in an elastic manner.

This elastoplastic or elastic deformation constitutes a compliance of the connection between the teeth of the bell and of the braking band which enables all of the teeth to be brought to a working condition in which the above-mentioned load is distributed uniformly or substantially uniformly.

In particular, if the material deforms in an elastoplastic manner, when the load is applied to the braking band for the first time, an at least partial permanent deformation of the inserts is brought about and takes up the manufacturing tolerances of the coupling between the teeth of the bell and of the braking band once and for all. Subsequent loads applied to the disk will therefore be transmitted substantially uniformly to all of the teeth.

If the material deforms in an elastic manner, it is appropriate to distinguish between two situations of use of the inserts.

If the inserts are disposed between the teeth of the bell and of the braking band without preloading, upon the application of the load, during a first stage, the clearance present between the teeth will be taken up and the band will rotate relative to the bell without transmitting the load. When the smallest of the clearances present between the teeth has been taken up and a portion of an insert present therein comes to bear on the tooth of the bell, it will start to undergo elastic deformation under load.

As the relative rotation between the braking band and the bell continues, a portion of a second insert in turn will come to bear on the respective second tooth of the bell. This will continue in the same manner until all of the teeth come to bear in order to work simultaneously until the total load is reached. Between the first tooth and the last tooth to come to bear there will be a load difference which will correspond to the elastic reaction of the insert which came to bear first and will be equal to the product of the elastic constant of the insert with the greatest tolerance (that is, the difference between the greatest clearance provided between the teeth of the bell and of the braking band and the smallest of these clearances, or the difference due to the manufacturing tolerances). This load difference will be smaller the smaller is the ratio between the difference in the dimensions of the teeth and the deformation which the insert undergoes (from the time at which all of the teeth are bearing) to reach to the total load.

Alternatively, the inserts are arranged between the teeth of the bell and of the braking band with preloading, for example, because the inserts are mounted between the teeth of the bell and of the braking band with a predetermined interference (or force fitting) which brings about preloading thereof. In this case the load differences between the various teeth will be given by the differences in the preloading of the various inserts due to the manufacturing tolerances of the distances between the facing teeth. The greatest of these preloading differences will correspond to the maximum load difference present at the same moment between the teeth. Precisely because a preloading is provided, in this situation, there is no clearance to be taken up between the facing teeth and, when the load due to the braking action is applied, all of the inserts deform simultaneously by the same amount, all increasing the load by the same amount.

In other words, the tooth which had the greatest preloading will be that which is loaded most, purely by an amount equal to its greater preloading. This difference in preloading which, in comparison with the overall load, will be equal only to a small fraction thereof, will be the sole lack of uniformity in the distribution of the load on the teeth of the bell and of the braking band.

In order to satisfy contingent and specific requirements, an expert in the art may apply modifications, adaptations and replacements of elements with other functionally equivalent elements to the above-described brake disk without thereby departing from the scope of protection of the invention as defined by the following claims.

## Claims

1. A brake disk (1; 40; 60; 80; 90; 100) comprising:
a bell (2), having an axis of rotation (3), and a braking band (4), produced as separate parts and in engagement by means of a shaped coupling (14) with tangential and axial restraints,
the brake disk comprising at least one insert (19; 41; 61; 81) in the shaped coupling (14),
**characterised in that**
said at least one insert (19; 41; 61; 81) is at least partially deformable in a permanent manner in order to take up the manufacturing tolerances of said coupling (14) between the bell (2) and the braking band (4).

2. A brake disk (1; 40; 60; 80; 90; 100) according to Claim 1 in which the bell (2) has a plurality of radial teeth (6) formed along its outer surface and each having an axial hole (15), the braking band (4) has a plurality of radial teeth (11) and corresponding recesses (9) between the teeth (11), which are formed along its inner surface, and the number of which is equal to the number of radial teeth (6) of the bell (2), and the tangential restraint is achieved by toothed coupling (14) between the radial teeth (6) of the bell (2) and the radial teeth (11) of the braking band (4), after the interposition of the at least one insert (19; 41; 61; 81) in the recesses (9) of the braking band (4).

3. A brake disk (1; 40; 60; 80; 90; 100) according to Claim 2 in which each tooth (6) of the bell (2) comprises two opposite radial sides (7) joined by a head surface (8), and each tooth (11) of the braking band (4) comprises two opposite radial sides (10) joined by a head surface (13), the facing sides (10) of a pair of neighbouring teeth (11) defining the sides of a corresponding recess (9).

4. A brake disk (1; 40; 60; 80; 90; 100) according to Claim 3 in which, in each of the recesses (9), the at least one insert (19; 41; 61; 81) bears on at least one of the two facing sides (10) of two corresponding neighbouring teeth (11) of the braking band (4) and is coupled with clearance with at least one of the two sides (7) of a corresponding tooth (6) of the bell (2), forming a toothed coupling with the two neighbouring teeth (11) of the braking band (4).

5. A brake disk (1; 40; 60; 80; 90; 100) according to Claim 3 in which, in each of the recesses (9), the at least one insert (19; 41; 61; 81) bears on or interferes with at least one of the two facing sides (10) of two corresponding neighbouring teeth (11) of the braking band (4) and bears on or interferes with at least one of the two sides (7) of a corresponding tooth (6) of the bell (2) forming a toothed coupling with the two neighbouring teeth (11) of the braking band (4).

6. A brake disk (1) according to Claim 4 or Claim 5 in which the at least one insert (19) comprises a first circumferential series (22) of first plate-like elements (19a) and a second circumferential series (23) of second plate-like elements (19b), the circumferential series (22, 23) being arranged on opposite sides of the toothed coupling (14) in a manner such that two opposed plate-like elements, that is, a first plate-like element (19a) and a second plate-like element (19b), are associated with each tooth (11) of the braking band (4).

7. A brake disk (1) according to Claim 6 in which each first or second plate-like element (19a, 19b) is substantially L-shaped and comprises a first limb (20a, 20b) and a second limb (21a, 21b), the limbs (20a, 20b; 21a, 21b) being joined to one another by a curved portion (26a, 26b) outside the plane containing the second limb (21a, 21b) and having a concave side facing towards the first limb (20a, 20b).

8. A brake disk (1) according to Claim 7 in which, for each pair of opposed first and second plate-like elements (19a, 19b) associated with a tooth (11) of the braking band (4), the first limb (20a) of the first plate-like element (19a) has an inner surface (24a) bearing on one of the two opposite sides (10) of the tooth (11) and an outer surface (25a) coupled with clearance with a side (7) of a first tooth (6a) of the bell (2) adjacent the tooth (11) of the braking band (4), and the second limb (20b) of the opposed, second plate-like element (19b) has an inner surface (24b) bearing on the other of the two sides (10) of the tooth (11) of the braking band (4) and an outer surface (25b) coupled with clearance with a side (7) of a second tooth (6b) of the bell (2) neighbouring the first tooth (6a) and adjacent the tooth (11) of the braking band (4).

9. A brake disk (1) according to Claim 8 in which the first limbs (20a, 20b) of each pair of opposed first and second plate-like elements (19a, 19b) extend so as to bear on the opposite sides (10) of the tooth (11) of the braking band (4), substantially throughout the axial length thereof.

10. A brake disk (1) according to Claim 8 or Claim 9 in which, for each pair of opposed first and second plate-like elements (19a, 19b) associated with a tooth (11) of the braking band (4), the second limb (21a) of the first plate-like element (19a) extends circumferentially on one side of the toothed coupling, (14) and the second limb (21b) of the opposed, second plate-like element (19b) extends circumferentially on the opposite side of the toothed coupling (14), in the opposite direction to the second limb (21a) of the first plate-like element (19a).

11. A brake disk (1) according to Claim 10 in which, for each pair of opposed first and second plate-like elements (19a, 19b) associated with a tooth (11) of the braking band (4), the second limb (21a) of the first plate-like element (19a) comprises a first portion (27a) which extends from the curved portion (26a) so as to be in contact with the tooth (11) of the braking band (4) and a second portion (28a) in contact with one of the first and second teeth (6a, 6b) of the bell (2), and the second limb (21b) of the opposed plate-like element (19b) comprises a first portion (27b) which extends from the curved portion (26b) so as to be in contact with the tooth (11) of the braking band (4) and a second portion (28b) in contact with the other of the first and second teeth (6a, 6b) of the bell (2).

12. A brake disk (1) according to Claim 10 in which the axial length or depth of the teeth (6) of the bell (2) is greater than the axial length or depth of the teeth (11) of the braking band (4) and, for each pair of opposed first and second plate-like elements (19a, 19b) associated with a tooth (11) of the braking band (4), the first portions (27a, 27b) are curved so as to have concave sides facing away from the first limbs (20a, 20b), and are in contact with respective corresponding surface portions of the tooth (11) of the braking band (4).

13. A brake disk (1) according to Claim 11 or Claim 12 in which each of the first and second plate-like elements (19a, 19b) of the first and second series (22, 23) has a hole (29a, 29b) formed in the second portion (28a, 28b) of the second limb (21a, 21b), the holes (29a, 29b) being arranged in a manner such that, for each tooth (6) of the bell (2), a pair of opposed holes (29a, 29b) belonging to a first plate-like element (19a) and to a second plate-like element (19b) associated with two adjacent teeth (11) of the braking band (4), respectively, is associated and aligned with a through hole (15) formed axially in the tooth (6).

14. A brake disk (1) according to Claim 13 in which the axial restraint between the bell (2) and the braking band (4) is achieved by the restraint of the first and second plate-like elements (19a, 19b) on the teeth (6) of the bell (2) by fixing means (32; 94; 102) extending through the holes (15) in the teeth (6) of the bell (2) and the opposed holes (29a, 29b) of the first and second plate-like elements (19a, 19b).

15. A brake disk (40) according to Claim 4 or Claim 5 in which the at least one insert (19; 41; 61; 81) comprises a circumferential series of substantially U-shaped, plate-like elements (41), each of the plate-like elements (41) being associated with a respective tooth (11) of the braking band (4) and comprising a base (42), as well as a first limb (43a) and a second limb (43b) disposed opposite one another, the limbs (43a, 43b) being joined to the base (42) by respective curved portions (44a, 44b) outside the respective planes containing the first and second limbs (43a, 43b) and having concave sides facing towards the base (42).

16. A brake disk (40) according to Claim 15 in which, for each plate-like element (41) associated with a tooth (11) of the braking band (4), the base (42) has an inner surface (45) bearing on a side (10) of the tooth (11) having its surface facing in the opposite direction to the direction of rotation (R) of the braking band (4) in use, and an outer surface (46) coupled with clearance with a first tooth (6a) of the bell (2) adjacent the tooth (11) of the braking band (4), and the first and second limbs (43a, 43b) extend circumferentially on opposite sides of the toothed coupling (14).

17. A brake disk (40) according to Claim 16 in which, for each plate-like element (41) associated with a tooth (11) of the braking band (4), each of the first and second limbs (43a, 43b) has a first portion (48a, 48b) which extends from a respective curved portion (44a, 44b) in contact with the tooth (11) of the braking band (4) and a second portion (49a, 49b) in contact with a second tooth (6b) of the bell (2) neighbouring the first tooth (6a) and adjacent the tooth (11) of the braking band (4).

18. A brake disk (40) according to Claim 17 in which the axial length or depth of the teeth (6) of the bell (2) is greater than the axial length or depth of the teeth (11) of the braking band (4) and, for each plate-like element (41) associated with a tooth (11) of the braking band (4), the first portions (48a, 48b) are curved so as to have concave sides facing away from the base (42) and are in contact with respective corresponding surface portions of the tooth (11) of the braking band (4).

19. A brake disk (40) according to Claim 17 or Claim 18 in which, for each plate-like element (41) associated with a tooth (11) of the braking band (4), the second end portion (49a, 49b) of each of the first and second limbs (43a, 43b) has a hole (50a, 50b), the holes (50a, 50b) being disposed opposite one another and aligned with a through-hole (15) formed axially in the second tooth (6b) of the bell (2).

20. A brake disk (40) according to Claim 19 in which the axial restraint between the bell (2) and the braking band (4) is achieved by restraint of the plate-like elements (41) on the teeth (6) of the bell (2) by fixing means (32; 94; 102) extending through the holes (15) in the teeth (6) of the bell (2) and the opposed holes (50a, 50b) in the plate-like elements (41).

21. A brake disk (60) according to Claim 4 or Claim 5 in which the at least one insert (19; 41; 61; 81) comprises a circumferential series of plate-like elements (61) having a profile substantially complementary to that of a tooth (6) of the bell (2), each of the plate-like elements (61) being associated with a respective recess (9) of the braking band (4) and comprising a base (65) joined at its opposite ends to two opposed limbs (62a, 62b).

22. A brake disk (60) according to Claim 21 in which each of the opposed limbs (62a, 62b) of a plate-like element (61) associated with a recess (9) of the braking band (4) has an inner surface (63a, 63b) coupled with clearance with one of the opposite sides (7) of a tooth (6) of the bell (2) in engagement in the recess (9), and an outer surface (64a, 64b) bearing on one of the facing sides (10) of the recess (9).

23. A brake disk (60) according to Claim 22 in which each base (65) of a plate-like element (61) associated with a recess (9) of the braking band (4) is coupled with clearance with the head surface (8) of the tooth (6) of the bell (2) which engages the recess (9).

24. A brake disk (60) according to Claim 23 in which the opposed limbs (62a, 62b) of the plate-like elements (61) extend substantially throughout the axial lengths of the sides (10) of the teeth (11) of the braking band (4) and the bases (65) of the plate-like elements (61) extend throughout the axial lengths of the head surfaces (8) of the teeth (6) of the bell (2).

25. A brake disk (80; 90; 100) according to Claim 24 in which the plate-like elements (61) are joined together to form a ring (81) by respective portions (82), each of the portions (82) joining the free ends of two facing limbs (62) belonging to two neighbouring plate-like elements (61).

26. A brake disk (80; 90; 100) according to Claim 25 in which each of the portions (82) has a surface coupled with clearance with a head surface (13) of a respective tooth (11) of the braking band (4).

27. A brake disk (60; 80) according to any one of Claims 23 to 26, in which the axial restraint between the bell (2) and the braking band (4) is achieved by means of a first plurality (66) of plates (68) disposed in a circumferential series on one side of the toothed coupling (14) and a second plurality (67) of plates (68) disposed in a circumferential series on the opposite side of the toothed coupling (14), alternating with the plates (68) of the first plurality (66), each of the plates (68) of the first and second pluralities (66, 67) being restrained on two neighbouring teeth (6) of the bell (2) by fixing means (32; 94; 102).

28. A brake disk (60; 80) according to Claim 27 in which the axial length or depth of the teeth (6) of the bell (2) is greater than the axial length or depth of the teeth (11) of the braking band (4), and each plate (68) of the first plurality (66) and of the second plurality (67) is curved so as to have a concave side facing away from the opposed limbs (62a, 62b) of the plate-like elements (61) and is in contact with a surface portion of a respective tooth (11) of the braking band (4).

29. A brake disk (90) according to Claim 25 or Claim 26 in which the axial restraint between the bell (2) and the braking band (4) is achieved by at least one annular plate (91) disposed on one side of the toothed coupling (14), the at least one annular plate (91) having a plurality of holes (93) each aligned with a corresponding hole (15) in a tooth (6) of the bell (2) and being restrained on the teeth (6) of the bell (2) by fixing means (32; 94; 102) extending through the holes (15) in the teeth (6) and the holes (93) in the at least one annular plate (91).

30. A brake disk (90) according to Claim 29, comprising two annular plates (91) disposed on opposite sides of the toothed coupling (14).

31. A brake disk (100) according to Claim 29 in which the axial restraint between the bell (2) and the braking band (4) is achieved by at least one annular plate (91) disposed on one side of the toothed coupling (14) and an annular band (101) disposed on the opposite side of the toothed coupling (14), the annular band (101) being formed integrally with or welded to the bell (2) in the region of a peripheral portion thereof comprising the radial teeth (6).

32. A brake disk (90; 100) according to any one of Claims 29 to 31 in which the axial length or depth of the teeth (6) of the bell (2) is greater than the axial length or depth of the teeth (11) of the braking band (4) and the at least one annular plate (91) has curved portions (103), each of the portions (103) being in contact with a corresponding surface portion of a tooth (11) of the braking band (4).

33. A brake disk (1; 40; 60; 80; 90; 100) according to any one of Claims 14 to 32 in which the fixing means (32; 94; 102) are selected form the group comprising bolt assemblies (32) and rivets (94; 102).

34. Method for making a brake disk (1; 40; 60; 80; 90; 100) comprising a bell (2), having an axis of rotation (3), and a braking band (4), produced as separate parts and in engagement by means of a shaped coupling (14) with tangential and axial restraints,
the method comprising the steps of:
interposing at least one insert (19; 41; 61; 81) in the shaped coupling (14) between the bell (2) and the braking band (4) and
applying a load to the braking band for the first time in order to at least partially deform in a permanent manner said at least one insert (19; 41; 61; 81) and thus take up the manufacturing tolerances of said coupling (14).

## Patentansprüche

1. Bremsscheibe (1;40;60;80;90;100) enthaltend:
eine Glocke (2) mit einer Drehachse (3) und ein Bremsband (4), die als getrennte Teile hergestellt sind und durch eine Formkupplung (14) mit tangentialen und axialen Zwangsführungen in Eingriff miteinander sind,
wobei die Bremsscheibe wenigstens einen Einsatz (19;41;61;81) in der Formkupplung (14) aufweist,
**dadurch gekennzeichnet, dass**
der wenigstens eine Einsatz (19;41;61;81) wenigstens teilweise dauerhaft verformbar ist, um die Herstellungstoleranzen der Kupplung (14) zwischen der Glocke (2) und dem Bremsband (4) aufzunehmen.

2. Bremsscheibe (1;40;60;80;90;100) nach Anspruch 1, bei der die Glocke (2) mehrere radiale Zähne (6) aufweist, die längs ihrer Außenfläche ausgebildet sind und jeweils ein axiales Loch (15) aufweisen, das Bremsband (4) mehrere radiale Zähne (11) und entsprechende Vertiefungen (9) zwischen den Zähnen (11) aufweist, die längs ihrer inneren Oberfläche ausgebildet sind und deren Zahl gleich der Zahl der radialen Zähne (6) der Glocke (2) ist, und die tangentiale Zwangsführung durch eine gezahnte Kupplung (14) zwischen den radialen Zähnen (6) der Glocke (2) und den radialen Zähnen (11) des Bremsbandes (4) nach dem Einsetzen des wenigstens einen Einsatzes (19;41;61;81) in die Vertiefungen (9) des Bremsbandes (4) erzielt ist.

3. Bremsscheibe (1;40;60;80;90;100) nach Anspruch 2, bei der jeder Zahn (6) der Glocke (2) zwei gegenüberliegende radiale Seiten (7) aufweist, die durch eine Kopffläche (8) miteinander verbunden sind, und jeder Zahn (11) des Bremsbandes (4) zwei gegenüberliegende radiale Seiten (10) aufweist, die durch eine Kopffläche (13) miteinander verbunden sind, wobei die gegenüberliegenden Seiten (10) eines Paares benachbarter Zähne (11) die Seiten einer entsprechenden Vertiefung (9) bestimmen.

4. Bremsscheibe (1;40;60;80;90;100) nach Anspruch 3, bei der in jeder der Vertiefungen (9) der wenigstens eine Einsatz (19;41;61;81) an wenigstens einer der zwei gegenüberliegenden Seiten (10) der zwei entsprechenden benachbarten Zähne (11) des Bremsbandes (4) anliegt und mit Spiel mit wenigstens einer der beiden Seiten (7) eines entsprechenden Zahns (6) der Glocke (2) gekoppelt ist, eine gezahnte Kupplung mit den zwei benachbarten Zähnen (11) des Bremsbandes (4) bildend.

5. Bremsscheibe (1;40;60;80;90;100) nach Anspruch 3, bei der in jeder der Vertiefungen (9) der wenigstens eine Einsatz (19;41;61;81) an wenigstens einer der zwei gegenüberliegenden Seiten (10) der zwei entsprechenden benachbarten Zähne (11) des Bremsbandes anliegt oder eingreift und an wenigstens einer der zwei Seiten (7) eines entsprechenden Zahns (6) der Glocke (2) anliegt oder eingreift, eine gezahnte Kupplung mit den zwei benachbarten Zähnen (11) des Bremsbandes (4) bildend.

6. Bremsscheibe (1) nach Anspruch 4 oder 5, bei der der wenigstens eine Einsatz (19) eine erste Umfangsserie (22) erster plattenförmiger Elemente (19a) und eine zweite Umfangsserie (23) zweiter plattenförmiger Elemente (19b) enthält, wobei die Umfangsserien (22,23) auf entgegengesetzten Seiten der gezahnten Kupplung (14) derart angeordnet sind, dass zwei entgegengesetzte plattenförmige Elemente, d.h. ein erstes plattenförmiges Element (19a) und ein zweites plattenförmiges Element (19b) jeweils einem Zahn (11) des Bremsbandes (4) zugeordnet sind.

7. Bremsscheibe (1) nach Anspruch 6, bei der jedes erste oder zweite plattenförmige Element (19a,19b) im Wesentlichen L-förmig ausgebildet ist und einen ersten Schenkel (20a,20b) und einen zweiten Schenkel (21a,21b) aufweist, wobei die Schenkel (20a,20b;21a,21b) miteinander durch einen bogenförmigen Abschnitt (26a,26b) außerhalb der Ebene miteinander verbunden sind, in der der zweite Schenkel (21a,21b) liegt, und eine konkave Seite haben, die zum ersten Schenkel (20a,20b) weist.

8. Bremsscheibe (1) nach Anspruch 7, bei der für jedes Paar gegenüberliegender erster und zweiter plattenförmiger Elemente (19a,19b), die einem Zahn (11) des Bremsbandes (4) zugeordnet sind, der erste Schenkel (20a) des ersten plattenförmigen Elements (19a) eine Innenfläche (24a) aufweist, die auf einer der zwei gegenüberliegenden Seiten (10) des Zahns (11) aufliegt, und eine Außenseite (25a) hat, die mit Spiel mit einer Seite (7) eines ersten Zahns (6a) der Glocke (2) benachbart dem Zahn (11) des Bremsbandes (4) gekuppelt ist, und der zweite Schenkel (20b) des gegenüberliegenden, zweiten plattenförmigen Elements (19b) eine Innenseite (24b) hat, die auf der anderen zwei Seiten (10) des Zahns (11) des Bremsbandes (4) aufliegt, und eine Außenseite (25b) hat, die mit Spiel mit einer Seite (7) eines zweiten Zahns (6b) der Glocke (2) benachbart dem ersten Zahn (6a) und benachbart dem Zahn (11) des Bremsbandes (4) gekuppelt ist.

9. Bremsscheibe (9) nach Anspruch 8, bei der die ersten Schenkel (20a,20b) eines jeden Paares gegenüberliegender erster und zweiter plattenförmiger Elemente (19a,19b) sich so erstrecken, dass sie an gegenüberliegenden Seiten (10) des Zahns (11) des Bremsbandes (4) im Wesentlichen über die gesamte axialer Länge desselben anliegen.

10. Bremsscheibe (1) nach Anspruch 8 oder 9, bei der für jedes Paar gegenüberliegender erster und zweiter plattenförmiger Elemente (19a,19b), die einem Zahn (11) des Bremsbandes (4) zugeordnet sind, der zweite Schenkel (21 a) des ersten plattenförmigen Elements (19a) sich in Umfangsrichtung auf einer Seite der gezahnten Kupplung (14) erstreckt und der zweite Schenkel (21 b) des gegenüberliegenden, zweiten plattenförmigen Elements (19b) sich in Umfangsrichtung auf der gegenüberliegenden Seite der gezahnten Kupplung (14) in entgegengesetzter Richtung bezüglich des zweiten Schenkels (21 a) des ersten plattenförmigen Elements (19a) erstreckt.

11. Bremsscheibe (1) nach Anspruch 10, in der für jedes Paar gegenüberliegender erster und zweiter plattenförmiger Elemente (19a,19b), die einem Zahn (11) des Bremsbandes (4) zugeordnet sind, der zweite Schenkel (21a) des ersten plattenförmigen Elements (19a) einen ersten Abschnitt (27a) aufweist, der sich von dem bogenförmigen Abschnitt (26a) derart erstreckt, dass er mit dem Zahn (11) des Bremsbandes (4) in Berührung ist, und einen zweiten Abschnitt (28a) aufweist, der mit einem der ersten und zweiten Zähne (6a,6b) der Glocke in Berührung ist, und der zweite Schenkel (21 b) des gegenüberliegenden plattenförmigen Elements (19b) einen ersten Abschnitt (27b) aufweist, der sich vom bogenförmigen Abschnitt (26b) derart erstreckt, dass er mit dem Zahn (11) des Bremsbandes (4) in Berührung ist, und einen zweiten Abschnitt (28b) aufweist, der mit dem anderen der ersten und zweiten Zähne (6a,6b) der Glocke (4) in Berührung ist.

12. Bremsscheibe (1 ) nach Anspruch 10, bei der die axiale Länge oder Tiefe der Zähne (6) der Glocke (2) größer als die axiale Länge oder Tiefe der Zähne (11) des Bremsbandes (4) ist, und für jedes Paar gegenüberliegender erster und zweiter plattenförmiger Elemente (19a,19b), die einem Zahn (11) des Bremsbandes (4) zugeordnet sind, die ersten Abschnitte (27a,27b) derart kurvenförmig sind, dass sie konkave Seiten, die von den ersten Schenkeln (20a,20b) weg weisen, haben und jeweils mit entsprechenden Oberflächenabschnitten des Zahns (11) des Bremsbandes (4) in Berührung sind.

13. Bremsscheibe (1) nach Anspruch 11 oder 12, bei der jedes der ersten und zweiten plattenförmigen Elemente (19a, 19b) der ersten und zweiten Serien (22,23) ein Loch (29a,29b) aufweist, das im zweiten Abschnitt (28a,28b) des zweiten Schenkels (21a,21b) ausgebildet ist, wobei die Löcher (29a,29b) derart angeordnet sind, dass für jeden Zahn (6) der Glocke (2) ein paar gegenüberliegender Löcher (29a,29b), die zu einem ersten plattenförmigen Element (19a) und zu einem zweiten plattenförmigen Element (19b), die jeweils benachbarten Zähnen (11) des Bremsbandes zugeordnet sind, einem Durchgangsloch (15) zugeordnet und darauf ausgerichtet sind, das axial in dem Zahn (6) ausgebildet ist.

14. Bremsscheibe (1) nach Anspruch 13, bei der die axiale Zwangsführung zwischen der Glocke (2) und dem Bremsband (4) durch die Zwangsführung der ersten und zweiten plattenförmigen Elemente (19a, 19b) an den Zähnen (6) der Glocke (2) durch Befestigungseinrichtungen (32;94;102) erzielt ist, die sich durch Löcher (15) in den Zähnen (6) der Glocke (2) und die gegenüberliegenden Löcher (29a,29b) der ersten und zweiten plattenförmigen Elemente (19a,19b) erstrecken.

15. Bremsscheibe (40) nach Anspruch 4 oder 5, bei der der wenigstens eine Einsatz (19;41;61;81) eine Umfangsserie im Wesentlichen U-förmiger plattenförmiger Elemente (41) aufweist, wobei jede der plattenförmigen Elemente (41) einem entsprechenden Zahn (11) des Bremsbandes (4) zugeordnet ist und eine Basis (41) sowie einen ersten Schenkel (43a) und einen zweiten Schenkel (43b) aufweist, die einander entgegengesetzt angeordnet sind, wobei die Schenkel (43a,43b) mit der Basis (42) durch bogenförmige Abschnitte (44a,44b) außerhalb der jeweiligen Ebenen verbunden sind, in denen die ersten und zweiten Schenkel (43a,43b) liegen, und konkave Seiten haben, die zur Basis (42) weisen.

16. Bremsscheibe (40) nach Anspruch 15, bei der für jedes plattenförmige Element (41), dem ein Zahn (11) des Bremsbandes (4) zugeordnet ist, die Basis (42) eine Innenfläche (45) aufweist, die an einer Seite (10) des Zahns (11) anliegt, dessen Oberfläche im Gebrauch in entgegengesetzer Richtung in Drehrichtung (R) des Bremsbandes (4) weist, und eine Außenflächen (46) aufweist, die mit Spiel mit einem ersten Zahn (6a) der Glocke (2) benachbart dem Zahn (11) des Bremsbandes (4) gekoppelt ist, und die ersten und zweiten Schenkel (43a,43b) sich in Umfangsrichtung auf gegenüberliegenden Seiten der gezahnten Kupplung (14) erstrecken.

17. Bremsscheibe (40) nach Anspruch 16, bei der für jedes plattenförmige Element (41), dem ein Zahn (11) des Bremsbandes (4) zugeordnet ist, jeder der ersten und zweiten Schenkel (43a,43b) einen ersten Abschnitt (48a,48b) aufweist, der sich jeweils von einem bogenförmigen Abschnitt (44a,44b) in Berührung mit dem Zahn (11) des Bremsbandes (4) erstreckt, und einen zweiten Abschnitt (49a,49b) aufweist, der mit einem zweiten Zahn (6b) der Glocke (2) benachbart dem ersten Zahn (6a) und benachbart dem Zahn (11) des Bremsbandes (4) in Berührung ist.

18. Bremsscheibe (40) nach Anspruch 17, bei der die axiale Länge oder Tiefe der Zähne (6) der Glocke (2) größer als die axiale Länge oder Tiefe der Zähne (11) des Bremsbandes (4) ist, und für jedes plattenförmige Element (41), dem ein Zahn (11) des Bremsbandes (4) zugeordnet ist, die ersten Abschnitte (48a,48b) so gebogen sind, dass sie konkave Seiten haben, die von der Basis (42) weg weisen und mit jeweils entsprechenden Oberflächenabschnitten des Zahns (11) des Bremsbandes (4) in Berührung sind.

19. Bremsscheibe (40) nach Anspruch 17 oder 18, bei der für jedes plattenförmige Element (41), dem ein Zahn (11) des Bremsbandes (4) zugeordnet ist, der zweite Endabschnitt (49a,49b) eines jeden der ersten und zweiten Schenkel (43a,43b) ein Loch (50a,50b) aufweist, wobei die Löcher (50a,50b) einander entgegengesetzt und auf ein Durchgangsloch (15) ausgerichtet sind, das axial im zweiten Zahn (6b) der Glocke (2) ausgebildet ist.

20. Bremsscheibe (40) nach Anspruch 19, bei der die axiale Zwangsführung zwischen der Glocke (2) und dem Bremsband (4) durch eine Zwangsführung der plattenförmigen Element (41) an den Zähnen (6) der Glocke (2) mittels Befestigungseinrichtungen (32;94;102) erzielt ist, die sich durch die Löcher (15) in den Zähnen (6) der Glocke (2) und die gegenüberliegenden Löcher (50a,50b) in den plattenförmigen Elementen (41) erstrecken.

21. Bremsscheibe (60) nach Anspruch 6 oder 5, bei der der wenigstens eine Einsatz (19;41;61;81) eine Umfangsserie plattenförmiger Elemente (61) aufweist, die ein zu einem Zahn (6) der Glocke (2) im Wesentlichen komplementäres Profil haben, wobei jedes der plattenförmigen Elemente (61) einer entsprechenden Vertiefung (9) des Bremsbandes (4) zugeordnet ist und eine Basis (65) hat, die an ihren gegenüberliegenden Enden mit zwei gegenüberliegenden Schenkeln (62a,62b) verbunden sind.

22. Bremsscheibe (60) nach Anspruch 21, bei der jeder der gegenüberliegenden Schenkel (62a,62b) eines plattenförmigen Elements (61), dem eine Vertiefung (9) des Brernsbandes (4) zugeordnet ist, eine Innenfläche (63a,63b) aufweist, die mit Spiel mit einer der gegenüberliegenden Seiten (7) eines Zahns (6) der Glocke (2) in Eingriff mit der Vertiefung (9) gekoppelt ist und eine Außenfläche (64a,64b) aufweist, die an einer der gegenüberliegenden Seiten (10) der Vertiefung (9) anliegt.

23. Bremsscheibe (60) nach Anspruch 22, bei der jede Basis (65) eines plattenförmigen Elements (61), dem eine Vertiefung (9) des Bremsbandes (4) zugeordnet ist, mit Spiel mit der Kopffläche (8) des Zahns (6) der Glocke (2) gekuppelt ist, der in die Vertiefung (9) eingreift.

24. Bremsscheibe (60) nach Anspruch 23, bei der die gegenüberliegenden Schenkel (62a,62b) der plattenförmigen Elemente (61) im Wesentlichen über die axialen Längen der Seiten (10) der Zähne (11) des Bremsbandes (4) erstrecken und die Basen (65) der plattenförmigen Elemente (61) sich über die gesamten axialen Längen der Kopfflächen (8) der Zähne (6) der Glocke (2) erstrecken.

25. Bremsscheibe (80;90;100) nach Anspruch 24, bei der die plattenförmigen Elemente (61) miteinander zur Bildung eines Rings (81) durch entsprechende Abschnitte (82) verbunden sind, wobei jeder der Abschnitte (82), der die freien Enden zweier gegenüberliegender Schenkel (62) verbindet, zu zwei benachbarten plattenförmigen Elementen (61) gehört.

26. Bremsscheibe (80;90;100) nach Anspruch 25, bei der jeder der Abschnitte (82) eine Oberfläche hat, die mit Spiel mit einer Kopffläche (13) eines entsprechenden Zahns (11) des Bremsbandes (4) gekuppelt ist.

27. Bremsscheibe (60;80) nach einem der Ansprüche 23 bis 26, bei der die axiale Zwangsführung zwischen der Glocke (2) und dem Bremsband (4) mittels einer ersten Vielzahl (66) Platten (68) erzielt ist, die in einer Umfangsserie auf einer Seite der gezahnten Kupplung (14) angeordnet ist, und mittels einer zweiten Vielzahl (67) Platten (68), die in einer Umfangsserie auf der gegenüberliegenden Seite der gezahnten Kupplung (14) angeordnet ist, mit den Platten (68) der ersten Vielzahl (66) abwechselnd, wobei jede der Platten (68) der ersten und zweiten Vielzahlen (66,67) an zwei benachbarten Zähnen (6) der Glocke (2) durch Befestigungseinrichtungen (32;94;102) zwangsgeführt ist.

28. Bremsscheibe (60;80) nach Anspruch 27, bei der die axiale Länge oder Tiefe der Zähne (6) der Glocke (2) größer als die axiale Länge oder Tiefe der Zähne (11) des Bremsbandes (4) ist und jede Platte (68) der ersten Vielzahl (66) und der zweiten Vielzahl (679 so gebogen ist, dass sie eine konkave Seite hat, die von den gegenüberliegenden Schenkeln (62a,62b) der plattenförmigen Elemente (61) weg weist und mit einem Oberflächenabschnitt eines entsprechenden Zahns (11) des Bremsbandes (4) in Berührung ist.

29. Bremsscheibe (90) nach Anspruch 25 oder 26, bei der axiale Zwangsführung zwischen der Glocke und dem Bremsband (4) durch wenigstens eine ringförmige Platte (91) erzielt ist, die auf einer Seite der gezahnten Kupplung (14) angeordnet ist, wobei die wenigstens eine ringförmige Platte (91) eine Vielzahl Löcher (93) aufweist, die jeweils auf ein entsprechendes Loch (15) in einem Zahn (6) der Glocke (2) ausgerichtet sind und an den Zähnen (6) der Glocke (2) durch Befestigungseinrichtungen (32;94;102) gehalten sind, die sich durch die Löcher (15) in den Zähnen (6) und die Löcher (93) in der wenigstens einen ringförmigen Platte (91) erstrecken.

30. Bremsscheibe (90) nach Anspruch 29, enthaltend zwei ringförmige Platten (91), die auf gegenüberliegenden Seiten der gezahnten Kupplung (14) angeordnet sind.

31. Bremsscheibe (100) nach Anspruch 29, bei der die axiale Zwangsführung zwischen der Glocke (2) und dem Bremsband (4) durch wenigstens eine ringförmige Platte (91), die auf einer Seite der gezahnten Kupplung (14) angeordnet ist, und durch ein ringförmiges Band (101), das auf der gegenüberliegenden Seite der gezahnten Kupplung (14) angeordnet ist, erzielt ist, wobei das ringförmige Band (101) integral mit der Glocke (2) im Bereich eines Umfangsabschnitts derselben, der die radialen Zähne (6) aufweist, ausgebildet ist oder daran angeschweißt ist.

32. Bremsscheibe (90;100) nach einem der Ansprüche 29 bis 31, bei der die axiale Länge oder Tiefe der Zähne (6) der Glocke (2) größer als die axiale Länge oder Tiefe der Zähne (11) des Bremsbandes (4) ist und die wenigstens eine ringförmige Platte (91) bogenförmige Abschnitte (103) aufweist, wobei jeder der Abschnitte (103) mit einem entsprechendem Oberflächenabschnitt eines Zahns (11) des Bremsbandes (4) in Berührung ist.

33. Bremsscheibe (1;40;60;80;90;100) nach einem der Ansprüche 14 bis 32, bei der die Befestigungseinrichtungen (32;94;102) aus der Gruppe ausgewählt ist, die Schraubanordnungen (32) und Nieten (94;102) enthält.

34. Verfahren zum Herstellen einer Bremsscheibe (1;40;60;80;90;100) mit einer Glocke (2), die eine Drehachse (3) aufweist, und einem Bremsband (4), die als gesonderte Teile hergestellt werden und mittels einer Formkupplung (14) mit tangentialen und axialen Zwangsführungen in Eingriff sind,
umfassend die folgenden Schritte:
Einfügen wenigstens eines Einsatzes (19;41;61;81) in die Formkupplung (14) zwischen der Glocke (2) und dem Bremsband (4) und
Anlegen einer Belastung an das Bremsband erstmals, um den wenigstens einen Einsatz (19;41;61;81) wenigstens teilweise dauerhaft zu verformen und somit die Herstellungstoleranzen der Kupplung (14) aufzunehmen.

## Revendications

1. Disque de frein (1; 40; 60; 80; 90; 100) comportant:
une cloche (2) possédant un axe de rotation (3), et un ruban de frein (4), fabriqués sous la forme de pièces séparées et engrenant au moyen d'un accouplement conformé (14) avec des retenues tangentielles et axiales,
le disque de frein comprenant au moins un insert (19; 41; 61; 81) dans l'accouplement conformé (14),
**caractérisé en ce que**
ledit au moins un insert (19; 41; 61; 81) est au moins partiellement déformable d'une manière permanente de manière à absorber les tolérances de fabrication dudit accouplement (14) entre la cloche (2) et le ruban de frein (4).

2. Disque de frein (1; 40; 60; 80; 90; 100) selon la revendication 1, dans lequel la cloche (2) possède une pluralité de dents radiales (6) formées le long de sa surface extérieure et possédant chacune un trou axial (15), le ruban de frein (4) possède une pluralité de dents radiales (11) et de renfoncements correspondants (9) entre les dents (11), qui sont formées le long de sa surface intérieure et dont le nombre est égal au nombre de dents radiales (6) de la cloche (2), et la retenue tangentielle est obtenue au moyen d'un accouplement denté (14) entre les dents radiales (6) de la cloche (2) et des dents radiales (11) du ruban de frein (4), après interposition d'au moins un insert (19; 41; 61; 81) dans les renfoncements (9) du ruban de frein (4).

3. Disque de frein (1; 40; 60; 80; 90; 100) selon la revendication 2, dans lequel chaque dent (6) de la cloche (2) comprend deux côtés radiaux opposés (7) réunis par une surface de tête (8), et chaque dent (11) du ruban de frein (4) comprend deux côtés radiaux opposés (10) réunis par une surface de tête (13), les côtés (10), qui se font face, d'une paire de dents voisines (11) définissant les côtés d'un renfoncement correspondant (9).

4. Disque de frein (1; 40; 60; 80; 90; 100) selon la revendication 3, dans lequel, dans chacun des renfoncements (9), le au moins un insert (19; 41; 61; 81) est en appui sur au moins l'un des deux côtés (10), qui se font face, de deux dents voisines correspondantes (11) du ruban de frein (4) et est couplé avec jeu à au moins l'un des deux côtés (7) d'une dent correspondante (6) de la cloche (2), formant un accouplement denté avec les deux dents voisines (11) du ruban de frein (4).

5. Disque de frein (1; 40; 60; 80; 90; 100) selon la revendication 3, dans lequel dans chacun des renfoncements (9), le au moins un insert (19; 41; 61; 81) est en appui sur ou en ajustement serré avec au moins l'un des deux côtés (10), qui se font face, des deux dents voisines correspondantes (11) du ruban de frein (4) et est monté selon un ajustement serré avec au moins l'un des deux côtés (7) d'une dent correspondante (6) de la cloche (2) formant un accouplement denté avec les deux dents voisines (11) du ruban de frein (4).

6. Disque de frein (1; 40; 60; 80; 90; 100) selon la revendication 4 ou la revendication 5, dans lequel le au moins un insert (19) comprend une première série circonférentielle (22) de premiers éléments en forme de plaques (19a) et une seconde série circonférentielle (23) de seconds éléments en forme de plaques (19b), les séries circonférentielles (22, 23) étant disposées sur des côtés opposés de l'accouplement denté (14) de telle sorte que deux éléments en forme de plaques opposés, c'est-à-dire un premier élément en forme de plaque (19a) et un second élément en forme de plaque (19b), sont associés à chaque dent (11) du ruban de frein (4).

7. Disque de frein (1) selon la revendication 6, dans lequel chaque premier ou second élément en forme de plaque (19a, 19b) est essentiellement en forme de L et comprend une première branche (20a, 20b) et une seconde branche (21a, 21b), les branches (20a, 20b, 21a, 21b) étant réunies entre elles par une partie courbe (26a, 26b) à l'extérieur du plan contenant la seconde branche (21a, 21b) et possédant une face concave tournée vers la première branche (20a, 20b).

8. Disque de frein (1) selon la revendication 7, dans lequel, pour chaque paire de premier et second éléments en forme de plaques opposés (19a, 19b) associés à une dent (11) du ruban de frein (4) la première branche (20a) du premier élément en forme de plaque (19a) comporte une surface intérieure (24a) en appui sur l'un des deux côtés opposés (10) de la dent (11) et une surface extérieure (25a) couplée avec jeu à un côté (7) d'une première dent (6a) de la cloche (2) au voisinage de la dent (11) du ruban de frein (4), et la seconde branche (20b) du second élément opposé en forme de plaque (19b) possède une surface intérieure (24b) en appui sur l'autre des deux côtés (10) de la dent (11) du ruban de frein (4) et une surface extérieure (25b) couplée avec jeu à un côté (7) d'une seconde dent (6b) de la cloche (2) voisine de la première dent (6a) et adjacente à la dent (11) du ruban de frein (4).

9. Disque de frein (1) selon la revendication 8, dans lequel les premières branches (20a, 20b) de chaque paire de premier et second éléments opposés en forme de plaques (19a, 19b) s'étendent de manière à être en appui sur les côtés opposés (10) de la dent (11) du ruban de frein (4), essentiellement sur toute la longueur axiale de ce dernier.

10. Disque de frein (1) selon la revendication 8 ou la revendication 9, dans lequel pour chaque paire de premier et second éléments opposés en forme de plaques (19a, 19b) associés à une dent (11) du ruban de frein (4), la seconde branche (21a) du premier élément en forme de plaque (19a) s'étend circonférentiellement d'un côté de l'accouplement denté (14), et la seconde branche (21b) du second élément opposé en forme de plaque (19b) s'étend circonférentiellement sur le côté opposé de l'accouplement denté (14), dans la direction tournée à l'opposé de la seconde branche (21a) du premier élément en forme de plaque (19a).

11. Disque de frein (1) selon la revendication 10, dans lequel pour chaque paire de premier et second éléments opposés en forme de plaques (19a, 19b) associés à une dent (11) du ruban de frein (4), la seconde branche (21a) du premier élément en forme de plaque (19a) comprend une première partie (27a) qui s'étend à partir de la partie courbe (26a) de manière à être en contact avec la dent (11) du ruban de frein (4), et une seconde partie (28a) en contact avec l'une des première et seconde dents (6a, 6b) de la cloche (2) et la seconde branche (21b) de l'élément opposé en forme de plaque (19b) comprend une première partie (27b) qui s'étend à partir de la partie courbe (26b) de manière à être en contact avec la dent (11) du ruban de frein (4) et une seconde partie (28b) en contact avec l'autre des première et seconde dents (6a, 6b) de la cloche (2).

12. Disque de frein (1) selon la revendication 10, dans lequel la longueur ou profondeur axiale de la dent (6) de la cloche (2) est supérieure à la longueur ou profondeur axiale des dents (11) du ruban de frein (4) et, pour chaque paire de premier et second éléments opposés en forme de plaques (19a, 19b) associés à une dent (11) du ruban de frein (4), des premières parties (27a, 27b) sont courbes de manière à posséder des côtés concaves qui sont tournés à l'opposé des premières branches (20a, 20b) et sont en contact avec des parties de surface respectives correspondantes de la dent (11) du ruban de frein (4).

13. Disque de frein (1) selon la revendication 11 ou la revendication 12, dans lequel chacun des premier et second éléments en forme de plaques (19a, 19b) des première et seconde séries (22, 23) comporte un trou (29a, 29b) formé dans la seconde partie (28a, 28b) de la seconde branche (21a, 21b), les trous (29a, 29b) étant disposés de telle sorte que, pour chaque dent (6) de la cloche (2), une paire de trous opposés (29a, 29b) appartenant à un premier élément en forme de plaque (19a) et à un second élément en forme de plaque (19b) associés à deux dents adjacentes (11) respectivement du ruban de frein (4) sont associés et alignés avec un trou traversant (15) formé axialement dans la dent (6).

14. Disque de frein (1) selon la revendication 13, dans lequel la retenue axiale entre la cloche (2) et le ruban de frein (4) est obtenue par la retenue des premier et second éléments en forme de plaques (19a, 19b) sur les dents (6) de la cloche (2) par des moyens de fixation (32; 94; 102) s'étendant dans les trous (15) formés dans les dents (6) de la cloche (2) et dans les trous opposés (29a, 29b) des premier et second éléments en forme de plaques (19a, 19b).

15. Disque de frein (40) selon la revendication 4 ou la revendication 5, dans lequel le au moins un insert (19; 41; 61; 81) comprend une série circonférentielle d'éléments en forme de plaques essentiellement configurées en U (41), chacun des éléments en forme de plaques (41) étant associé à une dent respective (11) du ruban de frein (4) et comprenant une base (42), ainsi qu'une première branche (43a) et une seconde branche (43b) situées à l'opposé l'une de l'autre, les branches (43a, 43b) étant réunies à la base (42) au moyen de parties courbes respectives (44a, 44b) à l'extérieur des plans respectifs contenant les première et seconde branches (43a, 43b) et possédant des faces concaves tournées vers la base (42).

16. Disque de frein (40) selon la revendication 15, dans lequel, pour chaque élément en forme de plaque (41) associé à une dent (11) du ruban de frein (4), la base (42) possède une surface intérieure (45) prenant appui sur un côté (10) de la dent (11) dont la surface est tournée dans la direction opposée au sens de rotation (R) du ruban de frein (4) en cours d'utilisation, et une surface extérieure (46) couplée avec jeu à une première dent (6a) de la cloche (2) au voisinage de la dent (11) du ruban de frein (4), et les première et seconde branches (43a, 43b) s'étendent circonférentiellement sur des côtés opposés de l'accouplement denté (14).

17. Disque de frein (40) selon la revendication 16, dans lequel, pour chaque élément en forme de plaque (41) associé à une dent (11) du ruban de frein (4), chacune des première et seconde branches (43a, 43b) possède une première partie (48a, 48b), qui s'étend depuis une partie courbe respective (44a, 44b) en contact avec la dent (11) du ruban de frein (4), et une seconde partie (49a, 49b) en contact avec une seconde dent (6b) de la cloche (2) voisine de la première dent (6a) et adjacente à la dent (11) du ruban de frein (4).

18. Disque de frein (40) selon la revendication 17, dans lequel la longueur ou profondeur axiale des dents (6) de la cloche (2) est supérieure à la longueur ou profondeur axiale des dents (11) du ruban de frein (4) et, pour chaque élément en forme de plaque (41) associé à une dent (11) du ruban de frein (4), des premières parties (48a, 48b) sont incurvées de manière à posséder des faces concaves tournées à l'opposé de la base (42) et sont en contact avec des parties correspondantes de surface de la dent (11) du ruban de frein (4).

19. Disque de frein (40) selon la revendication 17 ou la revendication 18, dans lequel pour chaque élément en forme de plaque (41) associé à une dent (11) du ruban de frein (4), la seconde partie d'extrémité (49a, 49b) de chacune des première et seconde branches (43a, 43b) possède un trou (50a, 50b), les trous (50a, 50b) étant disposés à l'opposé l'un de l'autre et étant alignés avec un trou traversant (15) formé axialement dans la seconde dent (6b) de la cloche (2).

20. Disque de frein (40) selon la revendication 19, dans lequel la retenue axiale entre la cloche (2) et le ruban de frein (4) est obtenue par retenue des éléments en forme de plaques (41) sur les dents (6) de la cloche (2) par des moyens de fixation (32; 94; 102) traversant les trous (15) situés dans les dents (6) de la cloche (2) et les trous opposés (50a, 50b) dans les éléments en forme de plaques (41).

21. Disque de frein (60) selon la revendication 4 ou la revendication 5, dans lequel au moins un insert (19; 41; 61; 81) comprend une série circonférentielle d'éléments en forme de plaques (61) possédant un profil essentiellement complémentaire de celui d'une dent (6) de la cloche (2), chacun des éléments en forme de plaques (61) étant associé à un renfoncement respectif (9) du ruban de frein (4) et comprenant une base (65) réunie, au niveau de ses extrémités opposées, à deux branches opposées (62a, 62b).

22. Disque de frein (60) selon la revendication 21, dans lequel chacune des branches opposées (62a, 62b) d'un élément en forme de plaque (61) associé à un renfoncement (9) du ruban de frein (4) possède une surface intérieure (63a, 63b) couplée avec jeu à l'un des côtés opposés (7) d'une dent (6) de la cloche (2) à l'état engagé dans le renfoncement (9), et une surface extérieure (64a, 64b) étant en appui sur l'un des côtés (10), qui se font face, du renfoncement (9).

23. Disque de frein (60) selon la revendication 22, dans lequel, chaque base (65) d'un élément en forme de plaque (61) associé à un renfoncement (9) du ruban de frein (4) est couplée avec jeu à la surface de tête (8) de la dent (6) de la cloche (2), et s'engage dans le renfoncement (9).

24. Disque de frein (60) selon la revendication 23, dans lequel les branches opposées (62a, 62b) des éléments en forme de plaques (61) s'étendent essentiellement sur les longueurs axiales des côtés (10) des dents (11) du ruban de frein (4), et les bases (65) des éléments en forme de plaques (61) s'étendent sur les longueurs axiales des surfaces de tête (8) des dents (6) de la cloche (2).

25. Disque de frein (80; 90; 100) selon la revendication 24, dans lequel les éléments en forme de plaque (61) sont réunis conjointement pour former un anneau (81) par des parties respectives (82), chacune des parties (82) réunissant les extrémités libres de deux branches (62), qui se font face et font partie de deux éléments en forme de plaques voisins (61).

26. Disque de frein (80; 90; 100) selon la revendication 25, dans lequel chacune des parties (82) possède une surface couplée avec jeu à une surface de tête (13) d'une dent respective (11) du ruban de frein (4).

27. Disque de frein (60; 80) selon l'une quelconque des revendications 23 à 26, dans lequel la retenue axiale entre la cloche (2) et le ruban de frein (4) est obtenue au moyen d'une première pluralité (66) de plaques (68) disposées selon une série circonférentielle d'un côté de l'accouplement denté (14), et d'une seconde pluralité (67) de plaques (68) disposées selon une série circonférentielle sur le côté opposé de l'accouplement denté (14), en alternant avec les plaques (68) de la première pluralité (66), chacune des plaques (68) des première et seconde pluralités (66, 67) étant retenue sur deux dents voisines (6) de la cloche (2) par des moyens de fixation (32; 94; 102).

28. Disque de frein (60; 80) selon la revendication 27, dans lequel la longueur ou la profondeur axiale des dents (6) de la cloche (2) est supérieure à la longueur ou à la profondeur axiale des dents (11) du ruban de frein (4), et chaque plaque (68) de la première pluralité (66) et de la seconde pluralité (67) est courbe de manière à présenter une face concave tournée à l'opposé des branches opposées (62a, 62b) des éléments en forme de plaques (61) et est en contact avec une partie de surface d'une dent respective (11) du ruban de frein (4).

29. Disque de frein (90) selon la revendication 25 ou la revendication 26, dans lequel la retenue axiale entre la cloche (2) et le ruban de frein (4) est obtenue à l'aide d'au moins une plaque annulaire (91) disposée sur un côté de l'accouplement denté (14), la au moins une plaque annulaire (91) possédant une pluralité de trous (93) alignés chacun avec un trou correspondant (15) formé dans une dent (6) de la cloche (2) et étant retenue sur les dents (6) de la cloche (2) par des moyens de fixation (32; 94; 102) qui traversent les trous (15) formés dans les dents (6) et les trous (93) formés dans la au moins une plaque annulaire (91).

30. Disque de frein (90) selon la revendication 29, comprenant deux plaques annulaires (91) disposées sur les côtés opposés de l'accouplement denté (14).

31. Disque de frein (100) selon la revendication 29, dans lequel la retenue axiale entre la cloche (2) et le ruban de frein (4) est obtenue à l'aide d'au moins une plaque annulaire (91) disposée sur un côté de l'accouplement denté (14) et un ruban annulaire (101) disposé sur le côté opposé de l'accouplement denté (14), le ruban annulaire (101) étant formé d'un seul tenant avec ou soudé à la cloche (2) dans la région d'une partie périphérique de cette dernière comprenant les dents radiales (6).

32. Disque de frein (90, 100) selon l'une quelconque des revendications 29 à 31, dans lequel la longueur ou la profondeur axiale des dents (6) de la cloche (2) est supérieure à la longueur ou à la profondeur axiale des dents (11) du ruban de frein (4), et la au moins une plaque annulaire (91) comporte des parties courbes (103), chacune des parties (103) étant en contact avec une partie de surface correspondante d'une dent (11) du ruban de frein (4).

33. Disque de frein (1; 40; 60; 80; 90; 100) selon l'une quelconque des revendications 14 à 32, dans lequel les moyens de fixation (32; 94; 102) sont choisis dans le groupe comprenant des ensembles à boulons (32) et des rivets (94, 102).

34. Procédé pour fabriquer un disque de frein (1; 40; 60; 80; 90; 100) comprenant une cloche (2) possédant un axe de rotation (3) et un ruban de frein (4) fabriqués en tant que pièces séparées et engrenant au moyen d'un accouplement conformé (14) avec des retenues tangentielles et axiales,
le procédé comportant les étapes consistant à:
intercaler au moins un insert (19; 41; 61; 81) dans l'accouplement conformé (14) entre la cloche (2) et le ruban de frein (4), et
appliquer une charge au ruban de frein pour la première fois de manière à déformer au moins partiellement, d'une manière permanente, ledit au moins un insert (19; 41; 61; 81) et absorber ainsi les tolérances de fabrication dudit accouplement (14).
